# EUROPÄISCHE PATENTSCHRIFT

(11) **EP 1 472 312 B1**
(45) Veröffentlichungstag und Bekanntmachung des Hinweises auf die Patenterteilung: **15.11.2006**
(21) Anmeldenummer: 03706399.7
(22) Anmeldetag: 29.01.2003
(51) Int. Cl.: C08K 5/12, C08L 27/06, B65D 39/00

(54) **EINTEILIGE VERSCHLUSSVORRICHTUNG AUS PVC**
SINGLE PIECE CLOSURE DEVICE MADE OF PVC
DISPOSITIF DE FERMETURE EN UNE SEULE PIECE CONSTITUEE DE PVC

(30) Priorität: 29.01.2002 DE 10203386
(43) Veröffentlichungstag der Anmeldung: 03.11.2004
(73) Patentinhaber: BASF Aktiengesellschaft, 67056 Ludwigshafen (DE)
(72) Erfinder: BREITSCHEIDEL, Boris, 67117 Limburgerhof (DE); OLBERT, Gerhard, 69221 Dossenheim (DE); ROSSATO, Klaus, 67105 Schifferstadt (DE); STORZUM, Uwe, 67551 Worms (DE)
(74) Vertreter: Isenbruck, Günter
(86) Internationale Anmeldenummer: PCT/EP2003/000900
(87) Internationale Veröffentlichungsnummer: WO 2003/064512

(56) Entgegenhaltungen:
- DE-U- 20 021 356
- GB-A- 724 364
- US-A- 3 296 180
- US-A- 4 230 231
- US-A- 5 317 047

## Beschreibung

Die vorliegende Erfindung betrifft einteilige Verschlussvorrichtungen, umfassend mindestens Polyvinylchlorid und mindestens eine substituierte oder unsubstituierte Cyclohexandicarbonsäure oder ein Derivat davon, Verfahren zur Herstellung einer derartigen Verschlussvorrichtung, sowie die Verwendung einer erfindungsgemäßen Verschlussvorrichtung Verschluss für Behälter, insbesondere für Flaschen oder Weinflaschen.

Aus dem Stand der Technik sind verschiedene synthetische Verschlussvorrichtungen bekannt. So beschreibt beispielsweise die EP-A 0 629 559 mehrteilige synthetische Stopfen mit einem Grundkörper aus Polyethylen bestehend aus einem Grundkörper, der an den Enden oder im Inneren eine Barriereschicht aus einem Mikrofilterlaminat enthält, die den Gasaustausch zwischen dem Flascheninhalt und der äußeren Atmosphäre inhibiert und für die Flüssigkeit im Inneren der Flasche undurchlässig ist. Optional kann der in der EP-A 0 629 559 Stopfen eine helikale Aussperrung besitzen, die das Ansetzen eines Korkenziehers erleichtert. Ein komplex aufgebauter Stopfen mit einer helikalen Aussparung zum Ansetzen eines Korkenziehers zur Verwendung als Flaschenverschluss wird auch in der US 4,364,486 erwähnt.

Auch mehrteilige Verschlussvorrichtungen, insbesondere Stopfen aus mehereren Materialien werden im Stand der Technik beschrieben. Beispielsweise in der WO 00/56526 wird ein extrudierter und geschäumter synthetischer Stopfen bestehend aus mehreren Komponenten und mehreren Schichten als Verschluss für Flaschen beschrieben. Auch in der WO 98/47783 wird eine extrudierter und geschäumter synthetischer Stopfen bestehend aus mehreren Komponenten und Schichten als Verschluss für Flaschen beschrieben. Derartige mehrschichtige Stopfen können gemäß der WO 98/47783 beispielsweise auch einen Kern aus einem Polymer auf Basis eines Vinylharzes besitzen.

Die GB 1092987 betrifft Korken basierend auf einem Gemisch aus Naturkork und geschäumtem Polyurethan, das mit einem Polyurethanharz imprägniert ist, aus der WO 99/01354 sind synthetische Korken bestehend aus einer Hartplastik-Kappe und einem Schaft aus einem thermoplastischen Elastomer als wiederverwendbarer Verschluss für Flaschen bekannt. In der WO 00/23259 wird darüber hinaus beschrieben, dass synthetische Stopfen zusätzlich Farbkonzentrate enthalten können, die den Stopfen in sinusiodalen Streifen durchziehen, um den synthetischen Stopfen ein korkenähnliches Aussehen zu verleihen.

Die im Stand der Technik beschriebenen Verschlüsse weisen den Nachteil auf, dass die gewünschten Eigenschaften, beispielsweise eine Barrierewirkung gegenüber Gasen, nur dadurch erzielt werden können, dass die Verschlüsse aus mehreren Komponenten und/oder mehreren Schichten aufgebaut werden. Die Herstellung solcher komplex aufgebauter Verschlüsse ist aufwendig und teuer und die gewünschten Eigenschaften lassen sich nur schwer stufenlos gezielt einstellen.

Der vorliegenden Erfindung lag daher ausgehend vom Stand der Technik die Aufgabe zugrunde, einteiligen Verschlüssen für Behälter, insbesondere für Weinflaschen, bereitzustellen, die aus einem Material bestehen, das einfach und kostengünstig herstellbar ist, und bei denen sich über die Zusammensetzung des Materials und die Herstellbedingungen die Eigenschaften, insbesondere die Barrierewirkung gegenüber Gasen, gezielt einstellen lassen.

Diese Aufgabe wird gelöst durch einteilige Verschlussvorrichtungen, umfassend mindestens Polyvinylchlorid und mindestens einen Weichmacher gemäß Anspruch 1.

Es wurde überraschenderweise gefunden, dass derartige Verschlussvorrichtungen umfassend ein Polyvinylchlorid, mindestens eine substituierte oder unsubstituierte Cyclohexandicarbonsäure oder ein Derivat davon als Weichmacher und gegebenenfalls weitere Zusätze als Verschlüsse für Behälter, insbesondere für Weinflaschen, sehr gut geeignet sind. Die erfindungsgemäßen einteiligen Verschlussvorrichtungen sind einfach und kostengünstig herstellbar. Über die Herstellbedingungen und die Zusammensetzung des Materials, vor allem über Art und Gehalt an Weichmacher, lassen sich die Eigenschaften der erfindungsgemäßen Verschlussvorrichtungen, insbesondere die Barrierewirkung gegenüber Gasen, stufenlos gezielt einstellen.

Unter einer Verschlussvorrichtung wird im Rahmen der vorliegenden Erfindung eine Vorrichtung verstanden, die zum Verschließen eines Behälters geeignet ist, beispielsweise ein Schraubverschluss oder ein Stopfen. Unter einer einteiligen Verschlussvorrichtung wird im Rahmen der vorliegenden Erfindung eine Verschlussvorrichtung verstanden, die aus einem einheitlichen Material besteht, das heißt nicht aus verschiedenen Schichten oder Komponenten unterschiedlicher Materialien.

In einer bevorzugten Ausführungsform betrifft die vorliegende Erfindung eine einteilige Verschlussvorrichtung, wobei die Verschlussvorrichtung ein Verschlussstopfen ist.

Im Rahmen der vorliegenden Erfindung wird unter einem Weichmacher eine Substanz verstanden, die die Härte des Polyvinylchlorids im erfindungsgemäßen Gemisch herabsetzt.

Die erfindungsgemäßen Verschlussvorrichtungen sind einfach und kostengünstig herstellbar. Über die Zusammensetzung der Verschlussvorrichtung, insbesondere über Art und Gehalt des Weichmachers, lassen sich die Eigenschaften gezielt einstellen. Wichtig sind zum einen eine ausreichende Kompressibilität und Elastizität der Verschlussvorrichtung, insbesondere wenn die Verschlussvorrichtung ein Stopfen ist, damit diese problemlos in die Flaschenöffnungen eingeführt werden können, diese dann aber trotzdem dicht verschließen. Von besonderer Bedeutung ist die Barrierewirkung der Verschlussvorrichtung gegenüber Gasen, z. B. Kohlendioxid, Schwefeldioxid und Sauerstoff. Beispielsweise bei Schaumwein ist zwischen dem Flascheninneren und der Umgebung kein Gasaustausch erwünscht. Weißwein verträgt nur einen minimalen Gasaustausch, während Rotwein zur Reifung einen gewissen Gasaustausch benötigt. Die erfindungsgemäßen Verschlussvorrichtungen erlauben es, die Gasdurchlässigkeit über die Herstellbedingungen und die Zusammensetzung, insbesondere über Art und Gehalt des Weichmachers, stufenlos gezielt einzustellen.

Als Weichmacher können prinzipiell alle dem Fachmann bekannte Verbindungen eingesetzt werden, die bei PVC eine weichmachende Wirkung entfalten. Dazu gehören beispielsweise die in L. Meier "Weichmacher für PVC" in Becker/Braun Kunststoffhandbuch, Band 2/1: Polyvinylchlorid, Carl Hanser Verlag München/Wien 1986 beschriebenen Weichmacher. Es ist ebenso möglich, dass im Rahmen der vorliegenden Erfindung ein Gemisch aus zwei oder mehr dieser Weichmacher eingesetzt wird.

Gemäß der Erfindung wird als Weichmacher mindestens eine Cyclohexandicarbonsäuren oder Derivate davon; weitere für eine Mischung geeignete Weichmacher sind Phthalate wie beispielsweise Dibutylphthalat, Diisobutylphthalat, Benzylbuphthalat, Dipentylphthalat, Di(2-ethylhexyl)phthalat, Diisooctylphthalat, Dicaprylphthalat, Di-n-octylphthalat, Dialphanylphthalat, Di-n-alkyl(Alfol 610)phthalat, Di-n-alkyl(Alfol 810)phthalat, Di-n-alkyl(79)phthalat, Di-n-alkyl(711)phthalat, Di-n-alkyl(911)phthalat, Diisononylphthalat, Diisodecylphthalat, Diisoundecylphthalat, Diisotridecylphthalat, und Dimethoxyglycolphthalat; Epoxidweichmacher wie beispielsweise epoxidiertes Sojabohnenöl, epoxidiertes Leinöl, 2-Ethylhexylepoxytallat und Diisodecyltetrahydro-4,5-epoxyphthalat; Adipate, Azelate und Sebacate, wie beispielsweise Di(2-ethylhexyl)adipat, Diisononyladipat, Diisodecyladipat, Benzyl-2-ethylhexyladipat, Di(2-ethylhexyl)azelat, Diisooctylazelat, Di-n-hexylazelat, Dibutylsebacat oder Dioctylsebacat; Phosphate wie Triarylphosphate, Arylalkylphosphate oder Trialkylphosphate; Polyesterweichmacher, beispielsweise Ester der Sebacinsäure, Azelainsäure, Adipinsäure oder Phthalsäure mit Diolen wie 1,2-Ethandiol, 1,2-Propandiol, 1,3-Propandiol, 1,3-Butandiol, 1,4-Butandiol, 1,5-Pentandiol, 1,6-Hexandiol oder 2,2-Dimethyl-1,3-propandiol; elastomer Weichmacher auf Basis von Nitrilkautschuk, Ethylen-Vinylacetat-Copolymere, Chlorpolyethylen, Methacrylester-Styrol-Acrylnitril-Copolymere, Acrylnitril-Styrol-Butadien-Copolymere, Dialkylsulfone, Polycarbonate, Polypropylenoxide, Polyurethane oder Polylactone; sowie weitere dem Fachmann bekannte Spezialweichmacher für PVC, die beispielsweise in L. Meier "Weichmacher für PVC" in Becker/Braun Kunststoffhandbuch, Band 2/1: Polyvinylchlorid, Carl Hanser Verlag München/Wien 1986, Seite 636 bis 639 genannt werden.

Als geeignete zusätzliche Diisononylphthalate sind beispielsweise zu nennen Palatinol DN, Vestinol N, Witamol 150, Palatinol N, Vestinol 9 und Jayflex DINP.

Der erfindungsgemäß verwendete Begriff *"Cyclohexanpolycarbonsäuren und Derivate davon"* umfasst sowohl die jeweiligen Cyclohexanpolycarbonsäuren an sich sowie Derivate davon, wobei insbesondere Mono-, Di- oder ggf. Tri- oder Tetraester sowie Anhydride der Cyclohexanpolycarbonsäuren zu nennen sind. Die eingesetzten Ester sind Akyl-, Cykloalkylsowie Alkoxyalkylester, wobei die Alkyl-, Cycloalkyl- sowie Alkoxyalkylgruppen in der Regel 1 bis 30, vorzugsweise 2 bis 20 und besonders bevorzugt 3 bis 18 Kohlenstoffatome umfassen und verzweigt oder linear sein können.

Im Rahmen der vorliegenden Erfindung muß mindestens eine Cyclohexan-1,2-dicarbonsäuren oder Derivate davon als cis-Isomer oder als trans-Isomer oder als Gemisch aus cis- und trans-Isomer vorliegen. Sofern im folgenden von Cyclohexandicarbonsäuren, insbesondere von Cyclohexan-1,2-dicarbonsäuren, die Rede ist, bezieht sich das Gesagte gleichermaßen auf das cis-Isomer, das trans-Isomer oder ein Gemisch aus cis- und trans-Isomer.

In einer möglichen Ausführungsform betrifft die vorliegende Erfindung daher eine einteilige Verschlussvorrichtung, wobei die Cyclohexandicarbonsäure oder das Derivat davon ausgewählt wird aus der Gruppe bestehend aus kernhydrierten Mono- und Dialkylestern der Phthalsäure, Isophthalsäure und Terephthalsäure, kernhydrierten Mono-, Di- und Trialkylestern der Trimellitsäure, der Trimesinsäure und der Hemimillitsäure, Mono-, Di-, Tri- und Tetraalkylestern der Pyrromellitsäure, wobei die Alkylgruppen linear oder verzweigt sein könne und jeweils 1 bis 30 Kohlenstoffatome aufweisen, kernhydrierten Anhydriden der Phthalsäure, Trimellitsäure, Trimesinsäure und Hemimellitsäure, Pyrromellitsäuredianhydrid und Gemischen aus zwei oder mehr davon.

Im einzelnen sind als geeignete Cyclohexandicarbonsäuren oder Derivate davon zu nennen:
Cyclohexan-1,4-dicarbonsäurealkylester, wie z.B. Cyclohexan-1,4-dicarbonsäuremonomethylester, Cyclohexan-1,4-dicarbonsäuredimethylester, Cyclohexan-1,4-dicarbonsäurediethylester, Cyclohexan-1,4-dicarbonsäuredi-n-propylester, Cyclohexan-1,4-dicarbonsäuredi-n-butylester, Cyclohexan-1,4-dicarbonsäuredi-tert-butylester, Cyclohexan-1,4-dicarbonsäurediisobutylester, Cyclohexan-1,4-dicarbonsäuremonoglykolester, Cyclohexan-1,4-dicarbonsäurediglykolester, Cyclohexan-1,4-dicarbonsäuredi-n-octylester, Cyclohexan-1,4-dicarbonsäurediisooctylester, Cyclohexan-1,4-dicarbonsäuremono-2-ethylhexylester, Cyclohexan-1,4-dicarbonsäuredi-2-ethylhexylester, Cyclohexan-1,4-dicarbonsäuredi-n-nonylester, Cyclohexan-1,4-dicarbonsäurediisononylester, Cyclohexan-1,4-dicarbonsäuredi-n-decylester, Cyclohexan-1,4-dicarbonsäuredi-n-undecylester, Cyclohexan-1,4-dicarbonsäurediisodecylester, Cyclohexan-1,4-dicarbonsäurediisododecylester, Cyclohexan-1,4-dicarbonsäuredi-n-octadecylester, Cyclohexan-1,4-dicarbonsäurediisooctadecylester, Cyclohexan-1,4-dicarbonsäuredi-n-eicosylester, Cyclohexan-1,4-dicarbonsäuremonocyclohexylester, Cyclohexan-1,4-dicarbonsäuredicyclohexylester; Cyclohexan-1,4-dicarbonsäurediisopropylester, Cyclohexan-1,4-dicarbonsäuredi-n-hexylester, Cyclohexan-1,4-dicarbonsäurediisohexylester, Cyclohexan-1,4-dicarbonsäuredi-n-heptylester, Cyclohexan-1,4-dicarbonsäurediisoheptylester, Cyclohexan-1,4-dicarbonsäuredi-2-propylheptylester, Cyclohexan-1,4-dicarbonsäurediisoundecylester, Cyclohexan-1,4-dicarbonsäuredi-n-dodecylester, Cyclohexan-1,4-dicarbonsäuredi-n-tridecylester, Cyclohexan-1,4-dicarbonsäurediisotridecylester, Cyclohexan-1,4-dicarbonsäuredi-n-pentylester, Cyclohexan-1,4-dicarbonsäurediisopentylester; Cyclohexan-1,2-dicarbonsäurediisopropylester, Cyclohexan-1,2-dicarbonsäuredi-n-hexylester, Cyclohexan-1,2-dicarbonsäurediisohexylester, Cyclohexan-1,2-dicarbonsäuredi-n-heptylester, Cyclohexan- 1,2-dicarbonsäurediisoheptylester, Cyclohexan-1,2-dicarbonsäuredi-2-propylheptylester, Cyclohexan-1,2-dicarbonsäurediisoundecylester, Cyclohexan-1,2-dicarbonsäuredi-n-dodecylester, Cyclohexan-1,2-dicarbonsäuredi-n-tridecylester, Cyclohexan-1,2-dicarbonsäurediisotridecylester, Cyclohexan-1,2-dicarbonsäuredi-n-pentylester, Cyclohexan-1,2-dicarbonsäurediisopentylester; Cyclohexan-1,2-dicarbonsäurealkylester, wie z.B. Cyclohexan-1,2-dicarbonsäuremonomethylester, Cyclohexan-1,2-dicarbonsäuredimethylester, Cyclohexan-1,2-dicarbonsäurediethylester, Cyclohexan-1,2-dicarbonsäuredi-n-propylester, Cyclohexan-1,2-dicarbonsäuredi-n-butylester, Cyclohexan-1,2-dicarbonsäuredi-tert.-butylester, Cyclohexan-1,2-dicarbonsäurediisobutylester, Cyclohexan-1,2-dicarbonsäuremonoglykolester, Cyclohexan-1,2-dicarbonsäurediglykolester, Cyclohexan-1,2-dicarbonsäuredi-n-octylester, Cyclohexan-1,2-dicarbonsäurediisooctylester, Cyclohexan-1,2-dicarbonsäuredi-2-ethylhexylester, Cyclohexan-1,2-dicarbonsäuredi-n-nonylester, Cyclohexan-1,2-dicarbonsäurediisononylester, Cyclohexan-1,2-dicarbonsäuredi-n-decylester, Cyclohexan-1,2-dicarbonsäurediisodecylester, Cyclohexan-1,2-dicarbonsäuredi-n-undecylester, Cyclohexan-1,2-dicarbonsäurediisododecylester, Cyclohexan-1,2-dicarbonsäuredi-n-octadecylester, Cyclohexan- 1,2-dicarbonsäurediisooctadecylester, Cyclohexan-1,2-dicarbonsäuredi-n-eicosylester, Cyclohexan-1,2-dicarbonsäuremonocyclohexylester, Cyclohexan-1,2-dicarbonsäuredicyclohexylester;
gemischte Ester der Cyclohexan-1,2-dicarbonsäure mit C1 bis C13-Alkoholen, wie z.B. Cyclohexan-1,2-dicarbonsäureethylmethylester, Cyclohexan-1,2-dicarbonsäure-n-propylmethylester, Cyclohexan-1,2-dicarbonsäureisopropylmethylester, Cyclohexan-1,2-dicarbonsäure-n-butylmethylester, Cyclohexan-1,2-dicarbonsäure-tert-butylmethylester, Cyclohexan-1,2-dicarbonsäureisobutylmethylester, Cyclohexan-1,2-dicarbonsäureglycolmethylester, Cyclohexan-1,2-dicarbonsäure-n-hexylmethylester, Cyclohexan-1,2-dicarbonsäureisohexylmethylester, Cyclohexan-1,2-dicarbonsäure-n-heptylmethylester, Cyclohexan-1,2-dicarbonsaureisoheptylmethylester, Cyclohexan-1,2-dicarbonsäure-n-octylmethylester, Cyclohexan-1,2-dicarbonsäureisooctylmethylester, Cyclohexan-1,2-dicarbonsäure-(2-ethylhexyl)methylester, Cyclohexan-1,2-dicarbonsäure-n-nonylmethylester, Cyclohexan-1,2-dicarbonsaureisononylmethylester, Cyclohexan-1,2-dicarbonsäure-(2-propylheptyl)methylester, Cyclohexan-1,2-dicarbonsäure-n-decylmethylester, Cyclohexan-1,2-dicarbonsäureisodecylmethylester, Cyclohexan-1,2-dicarbonsäure-n-undecylmethylester, Cyclohexan-1,2-dicarbonsaureisoundecylmethylester, Cyclohexan-1,2-dicarbonsäure-n-docecylmethylester, Cyclohexan-1,2-dicarbonsäureisododecylmethylester, Cyclohexan-1,2-dicarbonsäure-n-tridecylmethylester, Cyclohexan-1,2-dicarbonsäureisotridecylmethylester, Cyclohexan-1,2-dicarbonsaure-n-propylethylester, Cyclohexan-1,2-dicarbonsäureisopropylethylester, Cyclohexan-1,2-dicarbonsäure-n-butylethylester, Cylohexan-1,2-dicarbonsäure-tert-butylethylester, Cyclohexan-1,2-dicarbonsäureisobutylethylester, Cyclohexan-1,2-dicarbonsäureglycolethylester, Cyclohexan-1,2-dicarbonsäure-n-hexylethylester, Cyclohexan-1,2-dicarbonsäureisohexylethylestcr, Cyclohexan-1,2-dicarbonsäure-n-heptylethylester, Cyclohexan-1,2-dicarbonsäureisoheptylethylester, Cyclohexan-1,2-dicarbonsäure-n-octylethylester, Cyclohexan-1,2-dicarbonsäureisooctylethylester, Cyclohexan-1,2-dicarbonsäure-(2-ethyl-hexyl)-ethylester, Cyclohexan-1,2-dicarbonsäure-n-nonylethyl-ester, Cyclohexan-1,2-dicarbonsäureisononylethylester, Cyclohexan-1,2-dicarbonsäure-(2-propylheptyl)ethylester, Cyclohexan-1,2-dicarbonsäure-n-decylethylester, Cyclohexan-1,2-dicarbonsäureisodecylethylester, Cyclohexan-1,2-dicarbonsäure-n-undecylethylester, Cyclohexan-1,2-dicarbonsäureiso-undecylethylester, Cyclohexan-1,2-dicarbonsäure-n-docecylethylester, Cyclohexan-1,2-di-carbonsäureisododecylethylester, Cyclohexan-1,2-dicarbonsäure-n-tridecylethylester, Cyclohexan-1,2-dicarbonsäureisotridecylethylester, Cyclohexan-1,2-dicarbonsäureisopropyl-n-propylester, Cyclohexan-1,2-dicarbonsäure-n-butyl-n-propylester, Cyclohexan-1,2-dicarbonsäure-tert-butyl-n-propylester, Cyclohexan-1,2-dicarbonsäureisobutyl-n-propylester, Cyclohexan-1,2-dicarbonsäureglycol-n-propylester, Cyclohexan-1,2-dicarbonsäure-n-hexyl-n-propylester, Cyclohexan-1,2-dicarbonsäureisohexyl-n-propylester, Cyclohexan-1,2-dicarbonsäure-n-heptyl-n-propylester, Cyclohexan-1,2-dicarbonsäureisoheptyl-n-propylester, Cyclohexan-1,2-dicarbonsäure-n-octyl-n-propylester, Cyclohexan-1,2-dicarbonsäureisooctyl-n-propylester, Cyclohexan-1,2-dicarbonsäure-(2-ethylhexyl)-n-propylester, Cyclohexan-1,2-dicarbonsäure-n-nonyl-n-propylester, Cyclohexan-1,2-dicarbonsäureisononyl-n-propylester, Cyclohexan-1,2-dicarbonsäure-(2-propylheptyl)-n-propylester, Cyclohexan-1,2-dicarbonsäure-n-decyl-n-propylester, Cyclohexan-1,2-dicarbonsäureisodecyl-n-propylester, Cyclohexan-1,2-dicarbonsäure-n-undecyl-n-propylester, Cyclohexan-1,2-dicarbonsäureisoundecyl-n-propylester, Cyclohexan-1,2-dicarbonsäure-n-docecyl-n-propylester, Cyclohexan-1,2-dicarbonsäureisododecyl-n-propylester, Cyclohexan-1,2-dicarbonsäure-n-tridecyl-n-propylester, Cyclohexan-1,2-dicarbonsäureisotridecyl-n-propylester, Cyclohexan-1,2-dicarbonsäure-n-butylisopropylester, Cyclohexan-1,2-dicarbonsäure-tert-butylisopropylester, Cyclohexan-1,2-dicarbonsäureisobutylisopropylester, Cyclohexan-1,2-dicarbonsäureglycolisopropylester, Cyclohexan-1,2-dicarbonsäure-n-hexylisopropylester, Cyclohexan-1,2-dicarbonsäureisohexylisopropylester, Cyclohexan-1,2-dicarbonsäure-n-heptylisopropylester, Cyclohexan-1,2-dicarbonsäureisoheptylisopropylester, Cyclohexan-1,2-dicarbonsäure-n-octylisopropylester, Cyclohexan-1,2-dicarbonsäureiso-octylisopropylester, Cyclohexan-1,2-dicarbonsäure-(2-ethylhexyl)isopropylester, Cyclohexan-1,2-dicarbonsäure-n-nonylisopropylester, Cyclohexan-1,2-dicarbonsäureiso-nonylisopropylester, Cyclohexan-1,2-dicarbonsäure-(2-propylheptyl)isopropylester, Cyclohexan-1,2-dicarbonsäure-n-decylisopropylester, Cyclohexan-1,2-dicarbonsäureisodecyliso-propylester, Cyclohexan-1,2-dicarbonsäure-n-undecylisopropylester, Cyclohexan-1,2-dicarbonsäureisoundecylisopropylester, Cyclohexan-1,2-dicarbonsäure-n-docecylisopropylester, Cyclohexan-1,2-dicarbonsäureisododecylisopropylester, Cyclohexan-1,2-dicarbonsäure-n-tridecylisopropylester, Cyclohexan-1,2-dicarbonsäurcisotridecylisopropylester, Cyclohexan- 1,2-dicarbonsäure-tert-butyl-n-butylester, Cyclohexan-1,2-dicarbonsäureisobutyl-n-butylester, Cyclohexan-1,2-dicarbonsäureglycol-n-butylester, Cyclohexan-1,2-dicarbonsäure-n-hexyl-n-butylester, Cyclohexan-1,2-dicarbonsäureisohexyl-n-butylester, Cyclohexan-1,2-dicarbonsäure-n-heptyl-n-butylester, Cyclohexan-1,2-dicarbonsäureisoheptyl-n-butylester, Cyclohexan-1,2-dicarbonsäure-n-octyl-n-butylester, Cyclohexan-1,2-dicarbonsäureisooctyl-n-butylester, Cyclohexan-1,2-dicarbonsäure-(2-ethylhexyl)-n-butylester, Cyclohexan-1,2-dicarbonsäure-n-nonyl-n-butylester, Cyclohexan-1,2-dicarbonsäureisononyl-n-butylester, Cyclohexan-1,2-dicarbonsäure-(2-propylheptyl)-n-butylester, Cyclohexan-1,2-dicarbonsäure-n-decyl-n-butylester, Cyclohexan-1,2-dicarbonsäureisodecyl-n-butylester, Cyclohexan-1,2-dicarbonsäure-n-undecyl-n-butylester, Cyclohexan-1,2-dicarbonsäureisoundecyl-n-butylester, Cyclohexan-1,2-dicarbonsäure-n-docecyl-n-butylester, Cyclohexan-1,2-dicarbonsäureisododecyl-n-butylester, Cyclohexan-1,2-dicarbonsäure-n-tridecyl-n-butylester, Cyclohexan-1,2-dicarbonsäureisotridecyl-n-butylester, Cyclohexan-1,2-dicarbonsäureisobutyl-tert-butylester, Cyclohexan-1,2-dicarbonsäureglycol-tert-butylester, Cyclohexan-1,2-dicarbonsäure-n-hexyl-tert-butylester, Cyclohexan-1,2-dicarbonsäureisohexyl-tert-butylester, Cyclohexan-1,2-dicarbonsäure-n-heptyl-tert-butylester, Cyclohexan-1,2-dicarbonsäureisoheptyl-tert-butylester, Cyclohexan-1,2-dicarbonsäure-n-octyl-tert-butylester, Cyclohexan-1,2-dicarbonsäureisooctyl-tert-butylester, Cyclohexan-1,2-dicarbonsäure-(2-ethylhexyl)-tert-butylester, Cyclohexan-1,2-dicarbonsäure-n-nonyl-tert-butylester, Cyclohexan-1,2-dicarbonsäureisononyl-tert-butylester, Cyclohexan-1,2-dicarbonsäure-(2-propylheptyl)-tert-butylester, Cyclohexan-1,2-dicarbonsäure-n-decyl-tert-butylester, Cyclohexan-1,2-dicarbonsäureisodecyl-tert-butylester, Cyclohexan-1,2-dicarbonsäure-n-undecyl-tert-butylester, Cyclohexan-1,2-dicarbonsäureisoundecyl-tert-butylester, Cyclohexan-1,2-dicarbonsäure-n-docecyl-tert-butylester, Cyclohexan-1,2-dicarbonsäureisododecyl-tert-butylester, Cyclohexan-1,2-dicarbonsäure-n-tridecyl-tert-butylester, Cyclohexan-1,2-dicarbonsäureisotridecyl-tert-butylester, Cyclohexan-1,2-dicarbonsäureglycolisobutyl-ester, Cyclohexan-1,2-dicarbonsäure-n-hexylisobutylester, Cyclohexan-1,2-dicarbonsäureisohexylisobutylester, Cyclohexan-1,2-dicarbonsäure-n-heptylisobutylester, Cyclohexan-1,2-dicarbonsäureisoheptylisobutylester, Cyclohexan-1,2-dicarbonsäure-n-octylisobutylester, Cyclohexan-1,2-dicarbonsäureisooctylisobutylester, Cyclohexan-1,2-dicarbonsäure-(2-ethylhexyl)isobutylester, Cyclohexan-1,2-dicarbonsäure-n-nonyl-isobutylester, Cyclohexan-1,2-dicarbonsäureisononylisobutylester, Cyclohexan-1,2-dicarbonsäure-(2-propylheptyl)isobutylester, Cyclohexan-1,2-dicarbonsäure-n-decyl-isobutylester, Cyclohexan-1,2-dicarbonsäureisodecylisobutylester, Cyclohexan-1,2-dicarbonsäure-n-undecylisobutylester, Cyclohexan-1,2-dicarbonsäureisoundecylisobutylester, Cyclohexan-1,2-dicarbonsäure-n-docecylisobutylester, Cyclohexan-1,2-dicarbonsäureisododecylisobutylester, Cyclohexan-1,2-dicarbonsäure-n-tri-decyl-isobutylester, Cyclohexan-1,2-dicarbonsäureisotridecylisobutylester, Cyclohexan-1,2-dicarbonsäure-n-hexylglycolester, Cyclohexan-1,2-dicarbonsäureisohexylglycolester, Cyclohexan-1,2-dicarbonsäure-n-heptylglycolester, Cyclohexan-1,2-dicarbonsäureisoheptylglycolester, Cyclohexan-1,2-dicarbonsäure-n-octylglycolester, Cyclohexan-1,2-dicarbonsäureisooctylglycolester, Cyclohexan-1,2-dicarbonsäure-(2-ethylhexyl)gly-colester, Cyclohexan-1,2-dicarbonsäure-n-nonylglycolester, Cyclohexan-1,2-dicarbonsäureisononylglycolester, Cyclohexan-1,2-dicarbonsäure-(2-propylheptyl)glycolester, Cyclohexan-1,2-dicarbonsäure-n-decylglycolester, Cyclohexan-1,2-dicarbonsäureisodecylglycolester, Cyclohexan-1,2-dicarbonsäure-n-undecylglycolester, Cyclohexan-1,2-dicarbonsäureisoundecylglycolester, Cyclohexan-1,2-dicarbonsäure-n-docecylglycolester, Cyclohexan-1,2-dicarbonsäureisododecylglycolester, Cylohexan-1,2-dicarbonsäure-n-tridecylglycolester, Cyclohexan-1,2-dicarbonsäureisotridecylglycolester, Cyclohexan-1,2-dicarbonsäureisohexyl-n-hexylester, Cyclohexan-1,2-dicarbonsäure-n-heptyl-n-hexyl-ester, Cyclohexan-1,2-dicarbonsäureisoheptyl-n-hexylester, Cyclohexan-1,2-dicarbonsäure-n-octyl-n-hexylester, Cyclohexan-1,2-dicarbonsäureisooctyl-n-hexylester, Cyclohexan-1,2-dicarbonsäure-(2-ethylhexyl)-n-hexylester, Cyclohexan-1,2-dicarbonsäure-n-nonyl-n-hexylester, Cyclohexan-1,2-dicarbonsäureisononyl-n-hexylester, Cyclohexan-1,2-dicarbonsäure-(2-propylheptyl)-n-hexylester, Cyclohexan-1,2-dicarbonsäure-n-decyl-n-hexylester, Cyclohexan-1,2-dicarbonsäureisodecyl-n-hexylester, Cyclohexan-1,2-di-carbonsäure-n-undecyl-n-hexylester, Cyclohexan-1,2-dicarbonsäureisoundecyl-n-hexyl-ester, Cyclohexan-1,2-dicarbonsäure-n-docecyl-n-hexylester, Cyclohexan-1,2-dicarbonsäureisododecyl-n-hexylester, Cyclohexan-1,2-dicarbonsäure-n-tridecyl-n-hexylester, Cyclohexan-1,2-dicarbonsäureisotridecyl-n-hexylester, Cyclohexan-1,2-dicarbonsäure-n-heptylisohexylester, Cyclohexan-1,2-dicarbonsäureisoheptylisohexylester, Cyclohexan-1,2-dicarbonsäure-n-octylisohexylester, Cyclohexan-1,2-dicarbonsäureisooctyliso-hexylester, Cyclohexan-1,2-dicarbonsäure-(2-ethylhexyl)isohexylester, Cyclohexan-1,2-dicarbonsäure-n-nonylisohexylester, Cyclohexan-1,2-dicarbonsäureisononylisohexylester, Cyclohexan-1,2-dicarbonsäure-(2-propylheptyl)isohexylester, Cyclohexan-1,2-dicarbonsäure-n-decylisohexylester, Cyclohexan-1,2-dicarbonsäureisodecylisohexylester, Cyclohexan-1,2-dicarbonsäure-n-undecylisohexylester, Cyclohexan-1,2-dicarbonsäureisoun-decyliso-hexyl-ester, Cyclohexan-1,2-dicarbonsäure-n-docecylisohexylester, Cyclohexan-1,2-dicarbonsäureisododecylisohexylester, Cyclohexan-1,2-dicarbonsäure-n-tridecyliso-hexylester, Cyclohexan-1,2-dicarbonsäureisotridecylisohexylester, Cyclohexan-1,2-dicarbonsäureisoheptyl-n-heptyl-ester, Cyclohexan-1,2-dicarbonsäure-n-octyl-n-heptyl-ester, Cyclohexan-1,2-dicarbonsäureisooctyl-n-heptylester, Cyclohexan-1,2-dicarbonsäure-(2-ethylhexyl)-n-heptylester, Cyclohexan-1,2-dicarbonsäure-n-nonyl-n-heptylester, Cyclohexan-1,2-dicarbonsäureisononyl-n-heptylester, Cyclohexan-1,2-dicarbonsäure-(2-propylheptyl)-n-heptylester, Cyclohexan-1,2-dicarbonsäure-n-decyl-n-heptylester, Cyclohexan-1,2-dicarbonsäureisodecyl-n-heptylester, Cyclohexan-1,2-dicarbonsäure-n-undecyl-n-heptylester, Cyclohexan-1,2-dicarbonsäureiso-undecyl-n-heptylester, Cyclohexan-1,2-dicarbonsäure-n-docecyl-n-heptylester, Cyclohexan-1,2-dicarbonsäureisododecyl-n-heptylester, Cyclohexan-1,2-dicarbonsäure-n-tridecyl-n-heptylester, Cyclohexan-1,2-dicarbonsäureisotridecyl-n-heptylester, Cyclohexan-1,2-dicarbonsäure-n-octylisoheptylester, Cyclohexan-1,2-dicarbonsäureisooctyl-isoheptylester, Cyclohexan-1,2-dicarbonsäure-(2-ethylhexyl)isoheptylester, Cyclohexan-1,2-dicarbonsäure-n-nonylisoheptylester, Cyclohexan-1,2-dicarbonsäureisononyliso-heptylester, Cyclohexan-1,2-dicarbonsäure-(2-propylheptyl)isoheptylester, Cydohexan-1,2-dicarbonsäure-n-decylisoheptylester, Cyclohexan-1,2-dicarbonsäureisodecyliso-heptylester, Cyclohexan-1,2-dicarbonsäure-n-undecylisoheptylester, Cyclohexan-1,2-dicarbonsäureisoundecylisoheptylester, Cyclohexan-1,2-dicarbonsäure-n-docecyliso-heptylester, Cyclohexan-1,2-dicarbonsäureisododecylisoheptylester, Cyclohexan-1,2-dicarbonsäure-n-tridecylisoheptylester, Cyclohexan-1,2-dicarbonsäureisotridecyliso-heptylester, Cyclohexan-1,2-dicarbonsäureisooctyl-n-octylester, Cyclohexan-1,2-dicarbonsäure-(2-ethylhexyl)-n-octylester, Cyclohexan-1,2-dicarbonsäure-n-nonyl-n-octylester, Cyclohexan-1,2-dicarbonsäureisononyl-n-octylester, Cyclohexan-1,2-dicarbonsäure-(2-propylheptyl)-n-octylester, Cyclohexan-1,2-dicarbonsäure-n-decyl-n-octylester, Cyclohexan-1,2-dicarbonsäureisodecyl-n-octylester, Cyclohexan-1,2-dicarbonsäure-n-undecyl-n-octylester, Cyclohexan-1,2-dicarbonsäureisoundecyl-n-octylester, Cyclohexan-1,2-dicarbonsäure-n-docecyl-n-octylester, Cyclohexan-1,2-dicarbonsäureisododecyl-n-octylester, Cyclohexan-1,2-dicarbonsäure-n-tridecyl-n-octylester, Cyclohexan-1,2-dicarbonsäureisotridecyl-n-octylester, Cyclohexan-1,2-dicarbonsäure-(2-ethylhexyl)-isooctylester, Cyclohexan-1,2-dicarbonsäure-n-nonylisooctylester, Cyclohexan-1,2-dicarbonsäureisononylisooctylester, Cyclohexan-1,2-dicarbonsäure-(2-propylheptyl)-isooctylester, Cyclohexan-1,2-dicarbonsäure-n-decylisooctylester, Cyclohexan-1,2-dicarbonsäureisodecyliso-octylester, Cyclohexan-1,2-dicarbonsäure-n-undecylisooctyl-ester, Cyclohexan-1,2-dicarbonsäureisoundecylisooctylester, Cyclohexan-1,2-dicarbonsäure-n-docecylisooctylester, Cyclohexan-1,2-dicarbonsäureisododecylisooctylester, Cyclohexan-1,2-dicarbonsäure-n-tridecyl-isooctylester, Cyclohexan-1,2-dicarbonsäureisotridecylisooctylester, Cyclohexan-1,2-di-carbonsäure-n-nonyl-(2-ethylhexyl)ester, Cyclohexan-1,2-dicarbonsäureisononyl-(2-ethyl-hexyl)ester, Cyclohexan-1,2-dicarbonsäure-(2-propylheptyl)-(2-ethylhexyl)ester, Cyclohexan-1,2-dicarbonsäure-n-decyl-(2-ethylhexyl)ester, Cyclohexan-1,2-dicarbonsäureisodecyl-(2-ethylhexyl)ester, Cyclohexan-1,2-dicarbonsäure-n-undecyl-(2-ethylhexyl)ester, Cyclohexan-1,2-dicarbonsäureisoun-decyl-(2-ethylhexyl)ester, Cyclohexan-1,2-dicarbonsäure-n-docecyl-(2-ethylhexyl)ester, Cyclohexan-1,2-dicarbonsäureisododecyl-(2-ethylhexyl)ester, Cyclohexan-1,2-dicarbonsäure-n-tridecyl-(2-ethylhexyl)ester, Cyclohexan-1,2-dicarbonsäureiso-tridecyl-(2-ethylhexyl)ester, Cyclohexan-1,2-dicarbonsäureisononyl-n-nonylester, Cyclohexan-1,2-dicarbonsäure-(2-propylheptyl)-n-nonylester, Cyclohexan-1,2-dicarbonsäure-n-decyl-n-nonylester, Cyclohexan-1,2-dicarbonsäureisodecyl-n-nonylester, Cyclohexan-1,2-dicarbonsäure-n-undecyl-n-nonylester, Cyclohexan-1,2-dicarbonsäureisoundecyl-n-nonyl-ester, Cyclohexan-1,2-dicarbonsäure-n-docecyl-n-nonylester, Cyclohexan-1,2-dicarbonsäureisododecyl-n-nonylester, Cyclohexan-1,2-dicarbonsäure-n-tridecyl-n-nonylester, Cyclohexan-1,2-dicarbonsäureisotri-decyl-n-nonylester, Cyclohexan-1,2-dicarbonsäure-(2-propylheptyl)isononylester, Cyclohexan-1,2-dicarbonsäure-n-decylisononylester, Cyclohexan-1,2-dicarbonsäureisodecyl-isononylester, Cyclohexan-1,2-dicarbonsäure-n-undecylisononylester, Cyclohexan-1,2-dicarbonsäureisoundecylisononylester, Cyclohexan-1,2-dicarbonsäure-n-do-cecyl-isononylester, Cyclohexan-1,2-dicarbonsäureisododecylisononylester, Cyclohexan-1,2-dicarbonsäure-n-tridecylisononylester, Cyclohexan-1,2-dicarbonsäureisotridecyl-isononylester, Cyclohexan-1,2-dicarbonsäure-n-decyl-(2-propylheptyl)ester, Cyclohexan-1,2-dicarbonsäureisodecyl-(2-propylheptyl)ester, Cyclohexan-1,2-dicarbonsäure-n-undecyl-(2-propylheptyl)-ester, Cyclohexan-1,2-dicarbonsäureisoundecyl-(2-propylheptyl)ester, Cyclohexan-1,2-di-carbonsäure-n-docecyl-(2-propylheptyl)ester, Cyclohexan-1,2-dicarbonsäureisododecyl-(2-propylheptyl)ester, Cyclohexan-1,2-dicarbonsäure-n-tridecyl-(2-propylheptyl)ester, Cyclohexan-1,2-dicarbonsäureisotridecyl-(2-propylheptyl)ester, Cyclohexan-1,2-dicarbonsäureiso-decyl-n-decylester, Cyclohexan-1,2-dicarbonsäure-n-undecyl-n-decylester, Cyclohexan-1,2-dicarbonsäureisoundecyl-n-decylester, Cyclohexan-1,2-dicarbonsäure-n-docecyl-n-decylester, Cyclohexan-1,2-dicarbonsäureisododecyl-n-decylester, Cyclohexan-1,2-dicarbonsäure-n-tri-decyln-decylester, Cyclohexan-1,2-dicarbonsäureisotridecyl-n-decylester, Cyclohexan-1,2-dicarbonsäure-n-undecylisodecylester, Cyclohexan-1,2-dicarbonsäureisoundecylisodecylester, Cyclohexan-1,2-dicarbonsäure-n-docecylisodecylester, Cyclohexan-1,2-dicarbonsäureisodo-decylisodecylester, Cyclohexan-1,2-dicarbonsäure-n-tridecyliso-decylester, Cyclohexan-1,2-dicarbonsäureisotridecylisodecylester, Cyclohexan-1,2-dicarbonsäureisoundecyl-n-undecyl-ester, Cyclohexan-1,2-dicarbonsäure-n-docecyl-n-undecylester, Cyclohexan-1,2-dicarbonsäureisododecyl-n-undecylester, Cyclohexan-1,2-dicarbonsäure-n-tridecyl-n-undecylester, Cyclohexan-1,2-dicarbonsäureisotridecyl-n-undecylester, Cyclohexan-1,2-dicarbonsäure-n-docecylisoundecylester, Cyclohexan-1,2-dicarbonsäureisododecylisoundecylester, Cyclohexan-1,2-dicarbonsäure-n-tridecyliso-undecylester, Cyclohexan-1,2-dicarbonsäureisotri-decylisoundecylester, Cyclohexan-1,2-dicarbonsäureisododecyl-n-dodecylester, Cyclohexan-1,2-dicarbonsäure-n-tridecyl-n-dodecylester, Cyclohexan-1,2-dicarbonsäureisotridecyl-n-dodecylester, Cyclohexan-1,2-dicarbonsäure-n-tridecylisododecylester, Cyclohexan-1,2-dicarbonsäureisotridecyl-isododecylester, Cyclohexan-1,2-dicarbonsäureisotridecyl-n-tridecyl-ester, Cyclohexan-1,2-dicarbonsäuremethylcyclohexylester, Cyclohexan-1,2-dicarbonsäureethylcyclohexylester, Cyclohexan-1,2-dicarbonsäure-n-propylcyclohexylester, Cyclohexan-1,2-dicarbonsäureisopropylcyclohexylester, Cyclohexan-1,2-dicarbonsäure-n-butylcyclo-hexylester, Cyclohexan-1,2-dicarbonsäure-tert-butylcyclohexylester, Cyclohexan-1,2-dicarbonsäureisobutylcyclohexylester, Cyclohexan-1,2-dicarbonsäureglycolcyclohexylester, Cyclohexan-1,2-dicarbonsäure-n-hexylcyclohexylester, Cyclohexan-1,2-dicarbonsäureisohexylcyclo-hexylester, Cyclohexan-1,2-dicarbonsäure-n-heptylcyclohexylester, Cyclohexan-1,2-dicarbonsäureisoheptylcyclohexylester, Cyclohexan-1,2-dicarbonsäure-n-octylcyclo-hexylester, Cyclohexan-1,2-dicarbonsäureisooctylcyclohexylester, Cyclohexan-1,2-dicarbonsäure-(2-ethylhexyl)cyclohexylester, Cyclohexan-1,2-dicarbonsäure-n-nonyl-cyclohexylester, Cyclohexan-1,2-dicarbonsäureisononylcyclohexylester, Cyclohexan-1,2-dicarbonsäure-(2-propylheptyl)cyclohexylester, Cyclohexan-1,2-dicarbonsäure-n-decylcyclohexylester, Cyclohexan-1,2-dicarbonsäureisodecylcyclohexylester, Cyclohexan-1,2-dicarbonsäure-n-undecylcyclohexylester, Cyclohexan-1,2-dicarbonsäureisounde-cylcyclohexylester, Cyclohexan-1,2-dicarbonsäure-n-docecylcyclohexylester, Cyclohexan-1,2-dicarbonsäureisododecylcyclohexylester, Cyclohexan-1,2-dicarbonsäure-n-tridecyl-cyclohexylester, Cyclohexan-1,2-dicarbonsäureisotridecylcyclohexylester, Cyclohexan-1,2-dicarbonsäuremethylisopentylester, Cyclohexan-1,2-dicarbonsäureethylisopentylester, Cyclohexan-1,2-dicarbonsäure-n-propylisopentylester, Cyclohexan-1,2-dicarbonsäureisopropylisopentylester, Cyclohexan-1,2-dicarbonsäure-n-butyliso-pentylester, Cyclohexan-1,2-dicarbonsäure-tert-butylisopentylester, Cyclohexan-1,2-dicarbonsäureisobutylisopentylester, Cyclohexan-1,2-dicarbonsäureglycolisopentylester, Cyclohexan-1,2-dicarbonsäure-n-hexylisopentylester, Cyclohexan-1,2-dicarbonsäureisohexylisopentylester, Cyclohexan-1,2-dicarbonsäure-n-heptylisopentylester, Cyclohexan-1,2-dicarbonsäureisoheptylisopentylester, Cyclohexan-1,2-dicarbonsäure-n-octylisopentylester, Cyclohexan-1,2-dicarbonsäureisooctylisopentylester, Cyclohexan-1,2-dicarbonsäure-(2-ethylhexyl)isopentylester, Cyclohexan-1,2-dicarbonsäure-n-nonylisopentylester, Cyclohexan-1,2-dicarbonsäureisononylisopentylester, Cyclohexan-1,2-dicarbonsäure-(2-propylheptyl)isopentylester, Cyclohexan-1,2-dicarbonsäure-n-decyl-isopentylester, Cyclohexan-1,2-dicarbonsäureisodecylisopentylester, Cyclohexan-1,2-dicarbonsäure-n-undecylisopentylester, Cyclohexan-1,2-dicarbonsäureisoundecyliso-pentylester, Cyclohexan-1,2-dicarbonsäure-n-docecylisopentylester, Cyclohexan-1,2-dicarbonsäureisododecylisopentylester, Cyclohexan-1,2-dicarbonsäure-n-tridecyliso-pentylester, Cyclohexan-1,2-dicarbonsäureisotridecylisopentylester, Cyclohexan-1,2-dicarbonsäuremethyl-n-pentylester, Cyclohexan-1,2-dicarbonsäureethyl-n-pentylester, Cyclohexan-1,2-dicarbonsäure-n-propyl-n-pentylester, Cyclohexan-1,2-dicarbonsäureisopropyl-n-pentylester, Cyclohexan-1,2-dicarbonsäure-n-butyl-n-pentylester, Cyclohexan-1,2-dicarbonsäure-tert-butyl-n-pentylester, Cyclohexan-1,2-dicarbonsäureisobutyl-n-pentylester, Cyclohexan-1,2-dicarbonsäureglycol-n-pentylester, Cyclohexan-1,2-dicarbonsäure-n-hexyl-n-pentylester, Cyclohexan-1,2-di-carbonsäureisohexyl-n-pentylester, Cyclohexan-1,2-dicarbonsäure-n-heptyl-n-pentylester, Cyclohexan-1,2-dicarbonsäureisoheptyl-n-pentylester, Cyclohexan-1,2-dicarbonsäure-n-octyl-n-pentylester, Cyclohexan-1,2-dicarbonsäureisooctyl-n-pentylester, Cyclohexan-1,2-dicarbonsäure-(2-ethylhexyl)-n-pentylester, Cyclohexan-1,2-dicarbonsäure-n-nonyl-n-pentylester, Cyclohexan-1,2-dicarbonsäureisononyl-n-pentylester, Cyclohexan-1,2-dicarbonsäure-(2-propylheptyl)-n-pentylester, Cyclohexan-1,2-dicarbonsäure-n-decyl-n-pentylester, Cyclohexan-1,2-dicarbonsäureisodecyl-n-pentylester, Cyclohexan-1,2-dicarbonsäure-n-undecyl-n-pentylester, Cyclohexan-1,2-dicarbonsäureisoundecyl-n-pentylester, Cyclohexan-1,2-dicarbonsäure-n-docecyl-n-pentylester, Cyclohexan-1,2-dicarbonsäureisododecyl-n-pentylester, Cyclohexan-1,2-dicarbonsäure-n-tridecyl-n-pentylester, Cyclohexan-1,2-dicarbonsäureisotridecyl-n-pentylester; gemischte Ester der Cyclohexan-1,3-dicarbonsäure mit C1 bis C13-Alkoholen, wie z.B. Cyclohexan-1,3-dicarbonsäureethylmethylester, Cyclohexan-1,3-dicarbonsäure-n-propylmethylester, Cyclohexan-1,3-dicarbonsäureisopropylmethylester, Cyclohexan-1,3-dicarbonsäure-n-butylmethylester, Cyclohexan-1,3-dicarbonsäure-tert-butylmethylester, Cyclohexan-1,3-dicarbonsäureisobutylmethylester, Cyclohexan-1,3-dicarbonsäureglycolmethylester, Cyclohexan-1,3-dicarbonsäure-n-hexylmethylester, Cyclohexan-1,3-dicarbonsäureisohexylmethylester, Cyclohexan-1,3-dicarbonsäure-n-heptylmethylester, Cyclohexan-1,3-dicarbonsäureisoheptylmethylester, Cyclohexan-1,3-dicarbonsäure-n-octylmethylester, Cyclohexan-1,3-dicarbonsäureisooctylmethylester, Cyclohexan-1,3-dicarbonsäure-(2-ethylhexyl)methylester, Cyclohexan-1,3-dicarbonsäure-n-nonylmethylester, Cyclohexan-1,3-dicarbonsäureisononylmethylester, Cyclohexan-1,3-dicarbonsäure-(2-propylheptyl)methylester, Cyclohexan-1,3-dicarbonsäure-n-decylmethylester, Cyclohexan-1,3-dicarbonsäureisodecylmethylester, Cyclohexan-1,3-dicarbonsäure-n-undecylmethylester, Cyclohexan-1,3-dicarbonsäureisoundecylmethylester, Cyclohexan-1,3-dicarbonsäure-n-docecylmethylester, Cyclohexan-1,3-dicarbonsäureisododecyhnethylester, Cyclohexan-1,3-dicarbonsaure-n-tridecylmethylester, Cyclohexan-1,3-dicarbonsäureisotridecylmethylester, Cyclohexan-1,3-dicarbonsäure-n-propylethylester, Cyclohexan-1,3-dicarbonsäureisopropylethylester, Cyclohexan-1,3-dicarbonsäure-n-butylethylester, Cyclohexan-1,3-dicarbonsäure-tert-butylethylester, Cyclohexan-1,3-dicarbonsäureisobutylethylester, Cyclohexan-1,3-dicarbonsäureglycolethylester, Cyclohexan-1,3-dicarbonsäure-n-hexylethylester, Cyclohexan-1,3-dicarbonäureisohexylethylester, Cyclohexan-1,3-dicarbonsäure-n-heptylethylester, Cyclohexan-1,3-dicarbonsäureisoheptylethylester, Cyclohexan-1,3-dicarbonsäure-n-octylethylester, Cyclohexan-1,3-dicarbonsäureisooctylethylester, Cyclohexan-1,3-dicarbonsäure-(2-ethylhexyl)ethylester, Cyclohexan-1,3-dicarbonsäure-n-nonylethylester, Cyclohexan-1,3-dicarbonsäureisononylethylester, Cyclohexan-1,3-dicarbonsäure-(2-propylheptyl)ethylester, Cyclohexan-1,3-dicarbonsäure-n-decylethylester, Cyclohexan-1,3-dicarbonsäureisodecylethylester, Cyclohexan-1,3-dicarbonsäure-n-undecylethylester, Cyclohexan-1,3-dicarbonsäureisoundecylethylester, Cyclohexan-1,3-dicarbonsäure-n-docecylethylester, Cyclohexan-1,3-dicarbonsäureisododecylethylester, Cyclohexan-1,3-dicarbonsäure-n-tridecyl-ethylester, Cyclohexan-1,3-dicarbonsäureisotridecylethylester, Cyclohexan-1,3-dicarbonsäureisopropyl-n-propylester, Cyclohexan-1,3-dicarbonsäure-n-butyl-n-propylester, Cyclohexan-1,3-dicarbonsäure-tert-butyl-n-propylester, Cyclohexan-1,3-dicarbonsäureisobutyl-n-propylester, Cyclohexan-1,3-dicarbonsäureglycol-n-propylester, Cyclohexan-1,3-dicarbonsäure-n-hexyl-n-propylester, Cyclohexan-1,3-dicarbonsäureisohexyl-n-propylester, Cyclohexan-1,3-dicarbonsäure-n-heptyl-n-propylester, Cyclohexan-1,3-dicarbonsäureisoheptyl-n-propylester, Cyclohexan-1,3-dicarbonsäure-n-octyl-n-propylester, Cyclohexan-1,3-dicarbonsäureisooctyl-n-propylester, Cyclohexan-1,3-dicarbonsäure-(2-ethylhexyl)-n-propylester, Cyclohexan-1,3-dicarbonsäure-n-nonyl-n-propylester, Cyclohexan-1,3-dicarbonsäureisononyl-n-propylester, Cyclohexan-1,3-dicarbonsäure-(2-propylheptyl)-n-propylester, Cyclohexan-1,3-dicarbonsäure-n-decyl-n-propylester, Cyclohexan-1,3-dicarbonsäureisodecyl-n-propylester, Cyclohexan-1,3-dicarbonsäure-n-undecyl-n-propylester, Cyclohexan-1,3-dicarbonsäureisoundecyln-propylester, Cyclohexan-1,3-dicarbonsäure-n-docecyl-n-propylester, Cyclohexan-1,3-dicarbonsäureisododecyl-n-propylester, Cyclohexan-1,3-dicarbonsäure-n-tridecyl-n-propylester, Cyclohexan-1,3-dicarbonsäureisotridecyl-n-propylester, Cyclohexan-1,3-dicarbonsäure-n-butylisopropylester, Cyclohexan-1,3-dicarbonsäure-tert-butylisopropylester, Cyclohexan-1,3-dicarbonsäureisobutylisopropylester, Cyclohexan-1,3-dicarbonsäureglycolisopropylester, Cyclohexan-1,3-dicarbonsäure-n-hexylisopropylester, Cyclohexan-1,3-dicarbonsäureisohexylisopropylester, Cyclohexan-1,3-dicarbonsäure-n-heptylisopropylester, Cyclohexan-1,3-dicarbonsäureisoheptylisopropylester, Cyclohexan-1,3-dicarbonsäure-n-octylisopropylester, Cyclohexan-1,3-dicarbonsäureisooctylisopropylester, Cyclohexan-1,3-dicarbonsäure-(2-ethylhexyl)isopropylester, Cyclohexan-1,3-dicarbonsäure-n-nonylisopropylester, Cyclohexan-1,3-dicarbonsäureisononylisopropylester, Cyclohexan-1,3-dicarbonsäure-(2-propylheptyl)isopropylester, Cyclohexan-1,3-dicarbonsäure-n-decylisopropylester, Cyclohexan-1,3-dicarbonsäureisodecylisopropylester, Cyclohexan-1,3-dicarbonsäure-n-undecylisopropylester, Cyclohexan-1,3-dicarbonsäureisoundecyl-isopropylester, Cyclohexan-1,3-dicarbonsäure-n-docecylisopropylester, Cyclohexan-1,3-dicarbonsäureisododecylisopropylester, Cyclohexan-1,3-dicarbonsäure-n-tridecylisopropylester, Cyclohexan-1,3-dicarbonsäureisotridecylisopropylester, Cyclohexan-1,3-dicarbonsäure-tert-butyl-n-butylester, Cyclohexan-1,3-dicarbonsäureisobutyl-n-butylester, Cyclohexan-1,3-dicarbonsäureglycol-n-butylester, Cyclohexan-1,3-dicarbonsäure-n-hexyl-n-butylester, Cyclohexan-1,3-dicarbonsäureisohexyl-n-butylester, Cyclohexan-1,3-dicarbonsäure-n-heptyl-n-butylester, Cyclohexan-1,3-dicarbonsäureisoheptyl-n-butylester, Cyclohexan-1,3-dicarbonsäure-n-octyl-n-butylester, Cyclohexan-1,3-dicarbonsäureisooctyl-n-butylester, Cyclohexan-1,3-dicarbonsäure-(2-ethylhexyl)-n-butylester, Cyclohexan-1,3-dicarbonsäure-n-nonyl-n-butylester, Cyclohexan-1,3-dicarbonsäureisononyl-n-butylester, Cyclohexan-1,3-dicarbonsäure-(2-propylheptyl)-n-butylester, Cyclohexan-1,3-dicarbonsäure-n-decyl-n-butylester, Cyclohexan-1,3-dicarbonsäureisodecyl-n-butylester, Cyclohexan-1,3-dicarbonsäure-n-undecyl-n-butylester, Cyclohexan-1,3-dicarbonsäureisoundecyl-n-butylester, Cyclohexan-1,3-dicarbonsäure-n-docecyl-n-butylester, Cyclohexan-1,3-dicarbonsäureisododecyl-n-butylester, Cyclohexan-1,3-dicarbonsäure-n-tridecyl-n-butylester, Cyclohexan-1,3-dicarbonsäureisotridecyl-n-butylester, Cyclohexan-1,3-dicarbonsäureisobutyl-tert-butylester, Cyclohexan-1,3-dicarbonsäureglycol-tert-butylester, Cyclohexan-1,3-dicarbonsäure-n-hexyl-tert-butyl-ester, Cyclohexan-1,3-dicarbonsäureisohexyl-tert-butylester, Cyclohexan-1,3-dicarbonsäure-n-heptyl-tert-butylester, Cyclohexan-1,3-dicarbonsäureisoheptyl-tert-butylester, Cyclohexan-1,3-dicarbonsäure-n-octyl-tert-butylester, Cyclohexan-1,3-dicarbonsäureisooctyl-tert-butylester, Cyclohexan-1,3-dicarbonsäure-(2-ethylhexyl)-tert-butylester, Cyclohexan-1,3-dicarbonsäure-n-nonyl-tert-butylester, Cyclohexan-1,3-dicarbonsäureisononyl-tert-butylester, Cyclohexan-1,3-dicarbonsäure-(2-propylheptyl)-tert-butylester, Cyclohexan-1,3-dicarbonsäure-n-decyl-tert-butylester, Cyclohexan-1,3-dicarbonsäureisodecyl-tert-butylester, Cyclohexan-1,3-dicarbonsäure-n-undecyl-tert-butylester, Cyclohexan-1,3-dicarbonsäureisoundecyl-tert-butylester, Cyclohexan-1,3-dicarbonsäure-n-docecyl-tert-butylester, Cyclohexan-1,3-dicarbonsäureisododecyl-tert-butylester, Cyclohexan-1,3-dicarbonsäure-n-tridecyl-tert-butylester, Cyclohexan-1,3-dicarbonsäureiso-tridecyl-tert-butylester, Cyclohexan-1,3-dicarbonsäureglycolisobutylester, Cyclohexan-1,3-dicarbonsäure-n-hexylisobutylester, Cyclohexan-1,3-dicarbonsäureisohexylisobutyl-ester, Cyclohexan-1,3-dicarbonsäure-n-heptylisobutylester, Cyclohexan-1,3-dicarbonsäureisoheptylisobutylester, Cyclohexan-1,3-dicarbonsäure-n-octylisobutylester, Cyclohexan-1,3-dicarbonsäureisooctylisobutylester, Cyclohexan-1,3-dicarbonsäure-(2-ethyl-hexyl)isobutylester, Cyclohexan-1,3-dicarbonsäure-n-nonylisobutylester, Cyclohexan-1,3-dicarbonsäureisononylisobutylester, Cyclohexan-1,3-dicarbonsäure-(2-propylheptyl)-isobutylester, Cyclohexan-1,3-dicarbonsäure-n-decylisobutylester, Cyclohexan-1,3-dicarbonsäureisodecylisobutylester, Cyclohexan-1,3-dicarbonsäure-n-undecylisobutyl-ester, Cyclohexan-1,3-dicarbonsäureisoundecylisobutylester, Cyclohexan-1,3-dicarbonsäure-n-docecylisobutylester, Cyclohexan-1,3-dicarbonsäureisodo-decylisobutylester, Cyclohexan-1,3-dicarbonsäure-n-tridecylisobutylester, Cyclohexan-1,3-dicarbonsäureisotridecylisobutylester, Cyclohexan-1,3-dicarbonsäure-n-hexylglycolester, Cyclohexan-1,3-dicarbonsäureisohexylglycolester, Cyclohexan-1,3-dicarbonsäure-n-heptyl-glycol-ester, Cyclohexan-1,3-dicarbonsäureisoheptylglycolester, Cyclohexan-1,3-dicarbonsäure-n-octylglycolester, Cyclohexan-1,3-dicarbonsäureisooctylglycolester, Cyclohexan-1,3-dicarbonsäure-(2-ethylhexyl)glycolester, Cyclohexan-1,3-dicarbonsäure-n-nonylglycolester, Cyclohexan-1,3-dicarbonsäureisononylglycolester, Cyclohexan-1,3-dicarbonsäure-(2-propylheptyl)glycolester, Cyclohexan-1,3-dicarbonsäure-n-decylglycolester, Cyclohexan-1,3-dicarbonsäureisodecylglycolester, Cyclohexan-1,3-dicarbonsäure-n-undecylglycolester, Cyclohexan-1,3-dicarbonsäureisoundecylglycolester, Cyclohexan-1,3-dicarbonsäure-n-docecylglycolester, Cyclohexan-1,3-dicarbonsäureisododecylglycolester, Cyclohexan-1,3-dicarbonsäure-n-tridecylglycol-ester, Cyclohexan-1,3-dicarbonsäureisotridecylglycolester, Cyclohexan-1,3-dicarbonsäureisohexyl-n-hexylester, Cyclohexan-1,3-dicarbonsäure-n-heptyl-n-hexylester, Cyclohexan-1,3-dicarbonsäureisoheptyl-n-hexylester, Cyclohexan-1,3-dicarbonsäure-n-octyl-n-hexylester, Cyclohexan-1,3-dicarbonsäureisooctyl-n-hexylester, Cyclohexan-1,3-dicarbonsäure-(2-ethylhexyl)-n-hexylester, Cyclohexan-1,3-dicarbonsäure-n-nonyl-n-hexylester, Cyclohexan-1,3-dicarbonsäureisononyl-n-hexylester, Cyclohexan-1,3-dicarbonsäure-(2-propylheptyl)-n-hexylester, Cyclohexan-1,3-dicarbonsäure-n-decyl-n-hexylester, Cyclohexan-1,3-dicarbonsäureääisodecyl-n-hexylester, Cyclohexan-1,3-dicarbonsäure-n-undecyl-n-hexylester, Cyclohexan-1,3-dicarbonsäureisoundecyl-n-hexylester, Cyclohexan-1,3-dicarbonsäure-n-docecyl-n-hexylester, Cyclohexan-1,3-dicarbonsäureisododecyl-n-hexyl-ester, Cyclohexan-1,3-dicarbonsäure-n-tridecyl-n-hexylester, Cyclohexan-1,3-dicarbonsäureisotridecyl-n-hexylester, Cyclohexan-1,3-dicarbonsäure-n-heptyliso-hexylester, Cyclohexan-1,3-dicarbonsäureisoheptylisohexylester, Cyclohexan-1,3-dicarbonsäure-n-octylisohexylester, Cyclohexan-1,3-dicarbonsäureisooctylisohexylester, Cyclohexan-1,3-dicarbonsäure-(2-ethylhexyl)isohexylester, Cyclohexan-1,3-dicarbonsäure-n-nonylisohexylester, Cyclohexan-1,3-dicarbonsäureisononylisohexylester, Cyclohexan-1,3-dicarbonsäure-(2-propylheptyl)isohexylester, Cyclohexan-1,3-dicarbonsäure-n-decylisohexylester, Cyclohexan-1,3-dicarbonsäureisodecylisohexylester, Cyclohexan-1,3-dicarbonsäure-n-undecylisohexylester, Cyclohexan-1,3-dicarbonsäureisoundecyl-isohexylester, Cyclohexan-1,3-dicarbonsäure-n-docecylisohexylester, Cyclohexan-1,3-dicarbonsäureisododecylisohexylester, Cyclohexan-1,3-dicarbonsäure-n-tridecyliso-hexylester, Cyclohexan-1,3-dicarbonsäureisotridecylisohexylester, Cyclohexan-1,3-dicarbonsäureisoheptyl-n-heptylester, Cyclohexan-1,3-dicarbonsäure-n-octyl-n-heptyl-ester, Cyclohexan-1,3-dicarbonsäureisooctyl-n-heptylester, Cyclohexan-1,3-di-carbonsäure-(2-ethylhexyl)-n-heptylester, Cyclohexan-1,3-dicarbonsäure-n-nonyl-n-heptylester, Cyclohexan-1,3-dicarbonsäureisononyl-n-heptylester, Cyclohexan-1,3-dicarbonsäure-(2-propylheptyl)-n-heptylester, Cyclohexan-1,3-dicarbonsäure-n-decyl-n-heptylester, Cyclohexan-1,3-dicarbonsäureisodecyl-n-heptylester, Cyclohexan-1,3-dicarbonsäure-n-unde-cyl-n-heptylester, Cyclohexan-1,3-dicarbonsäureisoundecyln-heptylester, Cyclohexan-1,3-di-carbonsäure-n-docecyl-n-heptylester, Cyclohexan-1,3-dicarbonsäureisododecyl-n-heptylester, Cyclohexan-1,3-dicarbonsäure-n-tridecyl-n-heptylester, Cyclohexan-1,3-dicarbonsäureisotri-decyl-n-heptylester, Cyclohexan-1,3-dicarbonsäure-n-octylisoheptyl-ester, Cyclohexan-1,3-dicarbonsäureisooctylisoheptylester, Cyclohexan-1,3-dicarbonsäure-(2-ethylhexyl)isoheptyl-ester, Cyclohexan-1,3-dicarbonsäure-n-nonylisoheptylester, Cyclohexan-1,3-dicarbonsäureisononylisoheptylester, Cyclohexan-1,3-dicarbonsäure-(2-propylheptyl)isoheptylester, Cyclohexan-1,3-dicarbonsäure-n-decylisoheptylester, Cyclohexan-1,3-dicarbonsäureisodecyliso-heptylester, Cyclohexan-1,3-dicarbonsäure-n-undecylisoheptylester, Cyclohexan-1,3-dicarbonsäureisoundecylisoheptylester, Cyclohexan-1,3-dicarbonsäure-n-docecylisoheptyl-ester, Cyclohexan-1,3-dicarbonsäureisododecylisoheptylester, Cyclohexan-1,3-dicarbonsäure-n-tridecylisoheptylester, Cyclohexan-1,3-dicarbonsäureisotridecylisoheptylester, Cyclohexan-1,3-dicarbonsäureisooctyl-n-octylester, Cyclohexan-1,3-dicarbonsäure-(2-ethylhexyl)-n-octylester, Cyclohexan-1,3-dicarbonsäure-n-nonyl-n-octylester, Cyclohexan-1,3-dicarbonsäureisononyl-n-octylester, Cyclohexan-1,3-dicarbonsäure-(2-propylheptyl)-n-octylester, Cyclohexan-1,3-dicarbonsäure-n-decyl-n-octylester, Cyclohexan-1,3-dicarbonsäureisodecyl-n-octylester, Cyclohexan-1,3-dicarbonsäure-n-undecyl-n-octylester, Cyclohexan-1,3-dicarbonsäureisoundecyl-n-octylester, Cyclohexan-1,3-dicarbonsäure-n-docecyl-n-octylester, Cyclohexan-1,3-dicarbonsäureisododecyl-n-octylester, Cyclohexan-1,3-dicarbonsäure-n-tridecyl-n-octylester, Cyclohexan-1,3-dicarbonsäureisotridecyl-n-octylester, Cyclohexan-1,3-dicarbonsäure-(2-ethylhexyl)isooctylester, Cyclohexan-1,3-dicarbonsäure-n-nonylisooctylester, Cyclohexan-1,3-dicarbonsäureisononylisooctylester, Cyclohexan-1,3-dicarbonsäure-(2-propylheptyl)isooctylester, Cyclohexan-1,3-dicarbonsäure-n-decylisooctylester, Cyclohexan-1,3-dicarbonsäureisodecylisooctylester, Cyclohexan-1,3-dicarbonsäure-n-undecylisooctylester, Cyclohexan-1,3-dicarbonsäureiso-undecylisooctylester, Cyclohexan-1,3-dicarbonsäure-n-docecylisooctylester, Cyclohexan-1,3-dicarbonsäureisododecylisooctylester, Cyclohexan-1,3-dicarbonsäure-n-tridecyl-isooctylester, Cyclohexan-1,3-dicarbonsäureisotridecylisooctylester, Cyclohexan-1,3-dicarbonsäure-n-nonyl-(2-ethylhexyl)ester, Cyclohexan-1,3-dicarbonsäureisononyl-(2-ethylhexyl)ester, Cyclohexan-1,3-dicarbonsäure-(2-propylheptyl)-(2-ethylhexyl)-ester, Cyclohexan-1,3-dicarbonsäure-n-decyl-(2-ethylhexyl)ester, Cyclohexan-1,3-dicarbonsäureisodecyl-(2-ethylhexyl)ester, Cyclohexan-1,3-dicarbonsäure-n-undecyl-(2-ethyl-hexyl)-ester, Cyclohexan-1,3-dicarbonsäureisoundecyl-(2-ethylhexyl)ester, Cyclohexan-1,3-dicarbonsäure-n-docecyl-(2-ethylhexyl)ester, Cyclohexan-1,3-dicarbonsäureisodo-decyl-(2-ethylhexyl)ester, Cyclohexan-1,3-dicarbonsäure-n-tridecyl-(2-ethylhexyl)ester, Cyclohexan-1,3-dicarbonsäureisotridecyl-(2-ethylhexyl)ester, Cyclohexan-1,3-dicarbonsäureisononyl-n-nonylester, Cyclohexan-1,3-dicarbonsäure-(2-propylheptyl)-n-nonyl-ester, Cyclohexan-1,3-dicarbonsäure-n-decyl-n-nonylester, Cyclohexan-1,3-dicarbonsäureisodecyl-n-nonylester, Cyclohexan-1,3-dicarbonsäure-n-undecyl-n-nonylester, Cyclohexan-1,3-dicarbonsäureisoundecyl-n-nonylester, Cyclohexan-1,3-dicarbonsäure-n-docecyl-n-nonylester, Cyclohexan-1,3-dicarbonsäureisododecyl-n-nonylester, Cyclohexan-1,3-dicarbonsäure-n-tridecyl-n-nonylester, Cyclohexan-1,3-dicarbonsäureisotridecyl-n-nonylester, Cyclohexan-1,3-dicarbonsäure-(2-propylheptyl)isononylester, Cyclohexan-1,3-dicarbonsäure-n-decylisononylester, Cyclohexan-1,3-dicarbonsäureisodecylisononylester, Cyclohexan-1,3-dicarbonsäure-n-undecylisononylester, Cyclohexan-1,3-dicarbonsäureisoundecylisononylester, Cyclohexan-1,3-dicarbonsäure-n-docecylisononylester, Cyclohexan-1,3-dicarbonsäureisodo-decylisononylester, Cyclohexan-1,3-dicarbonsäure-n-tridecylisononylester, Cyclohexan-1,3-dicarbonsäureisotridecylisononylester, Cyclohexan-1,3-dicarbonsäure-n-decyl-(2-propylheptyl)ester, Cyclohexan-1,3-dicarbonsäureisodecyl-(2-propylheptyl)ester, Cyclohexan-1,3-dicarbonsäure-n-undecyl-(2-propylheptyl)ester, Cyclohexan-1,3-dicarbonsäureisoundecyl-(2-propylheptyl)ester, Cyclohexan-1,3-dicarbonsäure-n-docecyl-(2-propylheptyl)ester, Cyclohexan-1,3-dicarbonsäureisododecyl-(2-propylheptyl)ester, Cyclohexan-1,3-dicarbonsäure-n-tridecyl-(2-propylheptyl)ester, Cyclohexan-1,3-dicarbonsäureisotridecyl-(2-propylheptyl)ester, Cyclohexan-1,3-dicarbonsäureisodecyl-n-decylester, Cyclohexan-1,3-dicarbonsäure-n-undecyl-n-decylester, Cyclohexan-1,3-dicarbonsäureisoundecyl-n-decylester, Cyclohexan-1,3-dicarbonsäure-n-docecyl-n-decylester, Cyclohexan-1,3-dicarbonsäureisododecyl-n-decylester, Cyclohexan-1,3-dicarbonsäure-n-tridecyl-n-decylester, Cyclohexan-1,3-dicarbonsäureisotridecyl-n-decylester, Cyclohexan-1,3-dicarbonsäure-n-undecylisodecylester, Cyclohexan-1,3-dicarbonsäureisoundecylisodecylester, Cyclohexan-1,3-dicarbonsäure-n-docecylisodecylester, Cyclohexan-1,3-dicarbonsäureisododecylisodecylester, Cyclohexan-1,3-dicarbonsäure-n-tridecylisodecylester, Cyclohexan-1,3-dicarbonsäureisotridecylisodecylester, Cyclohexan-1,3-dicarbonsäureisoundecyl-n-undecylester, Cyclohexan-1,3-dicarbonsäure-n-docecyl-n-undecylester, Cyclohexan-1,3-dicarbonsäureisododecyl-n-undecylester, Cyclohexan-1,3-dicarbonsäure-n-tridecyl-n-undecylester, Cyclohexan-1,3-dicarbonsäureisotridecyl-n-undecylester, Cyclohexan-1,3-dicarbonsäure-n-docecylisoundecylester, Cyclohexan-1,3-dicarbonsäureisododecylisoundecylester, Cyclohexan-1,3-dicarbonsäure-n-tridecylisoundecylester, Cyclohexan-1,3-dicarbonsäureisotridecylisoundecylester, Cyclohexan-1,3-dicarbonsäureisododecyl-n-dodecylester, Cyclohexan-1,3-dicarbonsäure-n-tridecyl-n-dodecylester, Cyclohexan-1,3-dicarbonsäureisotridecyl-n-dodecylester, Cyclohexan-1,3-dicarbonsäure-n-tridecylisododecylester, Cyclohexan-1,3-dicarbonsäureisotridecylisododecylester, Cyclohexan-1,3-dicarbonsäureisotridecyl-n-tridecylester, Cyclohexan-1,3-dicarbonsäuremethylcyclohexylester, Cyclohexan-1,3-dicarbonsäureethylcyclohexylester, Cyclohexan-1,3-dicarbonsäure-n-propylcyclohexylester, Cyclohexan-1,3-dicarbonsäureisopropylcyclohexylester, Cyclohexan-1,3-dicarbonsäure-n-butylcyclohexylester, Cyclohexan-1,3-dicarbonsäure-tert-butylcyclohexylester, Cyclohexan-1,3-dicarbonsäureisobutylcyclohexylester, Cyclohexan-1,3-dicarbonsäureglycol-cyclohexylester, Cyclohexan-1,3-dicarbonsäure-n-hexylcyclohexylester, Cyclohexan-1,3-dicarbonsäureisohexylcyclohexylester, Cyclohexan-1,3-dicarbonsäure-n-heptylcyclohexylester, Cyclohexan-1,3-dicarbonsäureisoheptylcyclohexylester, Cyclohexan-1,3-dicarbonsäure-n-octylcyclohexylester, Cyclohexan-1,3-dicarbonsäureisooctylcyclohexylester, Cyclohexan-1,3-dicarbonsäure-(2-ethylhexyl)cyclohexylester, Cyclohexan-1,3-dicarbonsäure-n-nonylcyclohexylester, Cyclohexan-1,3-dicarbonsäureisononylcyclohexylester, Cyclohexan-1,3-dicarbonsäure-(2-propylheptyl)cyclohexylester, Cyclohexan-1,3-dicarbonsäure-n-decylcyclohexylester, Cyclohexan-1,3-dicarbonsäureisodecylcyclohexylester, Cyclohexan-1,3-dicarbonsäure-n-undecylcyclohexylester, Cyclohexan-1,3-dicarbonsäureisoundecylcyclohexylester, Cyclohexan-1,3-dicarbonsäure-n-docecylcyclohexylester, Cyclohexan-1,3-dicarbonsäureisododecylcyclohexylester, Cyclohexan-1,3-dicarbonsäure-n-tridecylcyclohexylester, Cyclohexan-1,3-dicarbonsäureisotridecylcyclohexylester, Cyclohexan-1,3-dicarbonsäuremethylisopentylester, Cyclohexan-1,3-dicarbonsäureethylisopentylester, Cyclohexan-1,3-dicarbonsäure-n-propylisopentylester, Cyclohexan-1,3-dicarbonsäureisopropylisopentylester, Cyclohexan-1,3-dicarbonsäure-n-butylisopentylester, Cyclohexan-1,3-dicarbonsäure-tert-butylisopentylester, Cyclohexan-1,3-dicarbonsäureisobutylisopentylester, Cyclohexan-1,3-dicarbonsäureglycoliso-pentylester, Cyclohexan-1,3-dicarbonsäure-n-hexylisopentylester, Cyclohexan-1,3-dicarbonsäureisohexylisopentylester, Cyclohexan-1,3-dicarbonsäure-n-heptylisopentyl-ester, Cyclohexan-1,3-dicarbonsäureisoheptylisopentylester, Cyclohexan-1,3-dicarbonsäure-n-octylisopentylester, Cyclohexan-1,3-dicarbonsäureisooctylisopentylester, Cyclohexan-1,3-dicarbonsäure-(2-ethylhexyl)isopentylester, Cyclohexan-1,3-dicarbonsäure-n-nonylisopentylester, Cyclohexan-1,3-dicarbonsäureisononylisopentylester, Cyclohexan-1,3-dicarbonsäure-(2-propylheptyl)isopentylester, Cyclohexan-1,3-dicarbonsäure-n-decylisopentylester, Cyclohexan-1,3-dicarbonsäureisodecylisopentylester, Cyclohexan-1,3-dicarbonsäure-n-undecylisopentylester, Cyclohexan-1,3-dicarbonsäureisoundecylisopentylester, Cyclohexan-1,3-dicarbonsäure-n-docecylisopentylester, Cyclohexan-1,3-dicarbonsäureisododecylisopentylester, Cyclohexan-1,3-dicarbonsäure-n-tridecylisopentylester, Cyclohexan-1,3-dicarbonsäureisotridecylisopentylester, Cyclohexan-1,3-dicarbonsäuremethyl-n-pentylester, Cyclohexan-1,3-dicarbonsäureethyl-n-pentylester, Cyclohexan-1,3-dicarbonsäure-n-propyl-n-pentylester, Cyclohexan-1,3-dicarbonsäureisopropyl-n-pentylester, Cyclohexan-1,3-dicarbonsäure-n-butyl-n-pentyl-ester, Cyclohexan-1,3-dicarbonsäure-tert-butyl-n-pentylester, Cyclohexan-1,3-dicarbonsäureisobutyl-n-pentylester, Cyclohexan-1,3-dicarbonsäureglycol-n-pentylester, Cyclohexan-1,3-dicarbonsäure-n-hexyl-n-pentylester, Cyclohexan-1,3-dicarbonsäureisohexyl-n-pentylester, Cyclohexan-1,3-dicarbonsäure-n-heptyl-n-pentylester, Cyclohexan-1,3-dicarbonsäureisoheptyl-n-pentylester, Cyclohexan-1,3-dicarbonsäure-n-octyl-n-pentyl-ester, Cyclohexan-1,3-dicarbonsäureisooctyl-n-pentylester, Cyclohexan-1,3-dicarbonsäure-(2-ethylhexyl)-n-pentylester, Cyclohexan-1,3-dicarbonsäure-n-nonyl-n-pentylester, Cyclohexan-1,3-dicarbonsäureisononyl-n-pentylester, Cyclohexan-1,3-dicarbonsäure-(2-propylheptyl)-n-pentylester, Cyclohexan-1,3-dicarbonsäure-n-decyl-n-pentylester, Cyclohexan-1,3-dicarbonsäureisodecyl-n-pentylester, Cyclohexan-1,3-dicarbonsäure-n-undecyl-n-pentylester, Cyclohexan-1,3-dicarbonsäureisoundecyl-n-pentylester, Cyclohexan-1,3-dicarbonsäure-n-docecyl-n-pentylester, Cyclohexan-1,3-dicarbonsäureisododecyl-n-pentylester, Cyclohexan-1,3-dicarbonsäure-n-tridecyl-n-pentylester, Cyclohexan-1,3-dicarbonsäureisotridecyl-n-pentylester; gemischte Ester der Cyclohexan-1,4-dicarbonsäure mit C1 bis C13-Alkoholen, wie z.B. Cyclohexan-1,4-dicarbonsäureethylmethylester, Cyclohexan-1,4-dicarbonsäure-n-propylmethylester, Cyclohexan-1,4-dicarbonsäureisopropylmethylester, Cyclohexan-1,4-dicarbonsäure-n-butylmethylester, Cyclohexan-1,4-dicarbonsäure-tert-butylmethylester, Cyclohexan-1,4-dicarbonsäureisobutylmethylester, Cyclohexan-1,4-dicarbonsäureglycolmethylester, Cyclohexan-1,4-dicarbonsäure-n-hexylmethylester, Cyclohexan-1,4-dicarbonsäureisohexylmethylester, Cyclohexan-1,4-dicarbonsäure-n-heptylmethylester, Cyclohexan-1,4-dicarbonsäureisoheptylmethylester, Cyclohexan-1,4-dicarbonsäure-n-octylmethylester, Cyclohexan-1,4-dicarbonsäureisooctylmethylester, Cyclohexan-1,4-dicarbonsäure-(2-ethylhexyl)methylester, Cyclohexan-1,4-dicarbonsäure-n-nonylmethylester, Cyclohexan-1,4-dicarbonsäureisononylmethylester, Cyclohexan-1,4-dicarbonsäure-(2-propylheptyl)methylester, Cyclohexan-1,4-dicarbonsäure-n-decylmethylester, Cyclohexan-1,4-dicarbonsäureisodecylmethylester, Cyclohexan-1,4-dicarbonsäure-n-undecylmethylester, Cyclohexan-1,4-dicarbonsäureisoundecylmethylester, Cyclohexan-1,4-dicarbonsäure-n-docecylmethylester, Cyclohexan-1,4-dicarbonsäureisododecylmethylester, Cyclohexan-1,4-dicarbonsäure-n-tridecylmethylester, Cyclohexan-1,4-dicarbonsäureisotridecylmethylester, Cyclohexan-1,4-dicarbonsäure-n-propylethylester, Cyclohexan-1,4-dicarbonsäureisopropylethylester, Cyclohexan-1,4-dicarbonsäure-n-butylethylester, Cyclohexan-1,4-dicarbonsäure-tert-butylethylester, Cyclohexan-1,4-dicarbonsäureisobutylethylester, Cyclohexan-1,4-dicarbonsäureglycolethylester, Cyclohexan-1,4-dicarbonsäure-n-hexylethylester, Cyclohexan-1,4-dicarbonsäureisohexylethylester, Cyclohexan-1,4-dicarbonsäure-n-heptylethylester, Cyclohexan-1,4-dicarbonsäureisoheptylethylester, Cyclohexan-1,4-dicarbonsäure-n-octylethylester, Cyclohexan-1,4-dicarbonsäureisooctylethylester, Cyclohexan-1,4-dicarbonsäure-(2-ethylhexyl)ethylester, Cyclohexan-1,4-dicarbonsäure-n-nonylethylester, Cyclohexan-1,4-dicarbonsäureisononylethylester, Cyclohexan-1,4-dicarbonsäure-(2-propylheptyl)ethylester, Cyclohexan-1,4-dicarbonsäure-n-decylethylester, Cyclohexan-1,4-dicarbonsäureisodecylethylester, Cyclohexan-1,4-dicarbonsäure-n-undecylethylester, Cyclohexan-1,4-dicarbonsäureisoundecylethyl-ester, Cyclohexan-1,4-dicarbonsäure-n-docecylethylester, Cyclohexan- 1,4-dicarbonsäureisododecylethylester, Cyclohexan-1,4-dicarbonsäure-n-tridecylethylester, Cyclohexan-1,4-dicarbonsäureisotridecylethylester, Cyclohexan-1,4-dicarbonsäureisopropyl-n-propylester, Cyclohexan-1,4-dicarbonsäure-n-butyl-n-propylester, Cyclohexan-1,4-dicarbonsäure-tert-butyl-n-propylester, Cyclohexan-1,4-dicarbonsäureisobutyl-n-propylester, Cyclohexan-1,4-dicarbonsäureglycol-n-propylester, Cyclohexan-1,4-dicarbonsäure-n-hexyl-n-propylester, Cyclohexan-1,4-dicarbonsäureisohexyl-n-propylester, Cyclohexan-1,4-dicarbonsäure-n-heptyl-n-propylester, Cyclohexan-1,4-dicarbonsäureisoheptyl-n-propylester, Cyclohexan-1,4-dicarbonsäure-n-octyl-n-propylester, Cyclohexan-1,4-dicarbonsäureisooctyl-n-propylester, Cyclohexan-1,4-dicarbonsäure-(2-ethylhexyl)-n-propylester, Cyclohexan-1,4-dicarbonsäure-n-nonyl-n-propylester, Cyclohexan-1,4-dicarbonsäureisononyl-n-propylester, Cyclohexan-1,4-dicarbonsäure-(2-propylheptyl)-n-propylester, Cyclohexan-1,4-dicarbonsäure-n-decyl-n-propylester, Cyclohexan-1,4-dicarbonsäureisodecyln-propylester, Cyclohexan-1,4-dicarbonsäure-n-undecyl-n-propylester, Cyclohexan-1,4-dicarbonsäureisoundecyl-n-propylester, Cyclohexan-1,4-dicarbonsäure-n-docecyl-n-propylester, Cyclohexan-1,4-dicarbonsäureisododecyl-n-propylester, Cyclohexan-1,4-dicarbonsäure-n-tridecyl-n-propylester, Cyclohexan-1,4-dicarbonsäureisotridecyl-n-propylester, Cyclohexan-1,4-dicarbonsäure-n-butylisopropylester, Cyclohexan-1,4-dicarbonsäure-tert-butylisopropylester, Cyclohexan-1,4-dicarbonsäureisobutylisopropylester, Cyclohexan-1,4-dicarbonsäureglycolisopropylester, Cyclohexan-1,4-dicarbonsäure-n-hexylisopropylester, Cyclohexan-1,4-dicarbonsäureisohexylisopropylester, Cyclohexan-1,4-dicarbonsäure-n-heptylisopropylester, Cyclohexan-1,4-dicarbonsäureisoheptylisopropylester, Cyclohexan-1,4-dicarbonsäure-n-octylisopropylester, Cyclohexan-1,4-dicarbonsäureisooctylisopropylester, Cyclohexan-1,4-dicarbonsäure-(2-ethylhexyl)isopropylester, Cyclohexan-1,4-dicarbonsäure-n-nonylisopropylester, Cyclohexan-1,4-dicarbonsäureisononylisopropylester, Cyclohexan-1,4-dicarbonsäure-(2-propylheptyl)isopropylester, Cyclohexan-1,4-dicarbonsäure-n-decylisopropylester, Cyclohexan-1,4-dicarbonsäureisodecylisopropylester, Cyclohexan-1,4-dicarbonsäure-n-undecylisopropylester, Cyclohexan-1,4-dicarbonsäureisounde-cylisopropylester, Cyclohexan-1,4-dicarbonsäure-n-docecylisopropylester, Cyclohexan-1,4-dicarbonsäureisododecylisopropylester, Cyclohexan-1,4-dicarbonsäure-n-tridecyl-isopropylester, Cyclohexan-1,4-dicarbonsäureisotridecylisopropylester, Cyclohexan-1,4-dicarbonsäure-tert-butyl-n-butylester, Cyclohexan-1,4-dicarbonsäureisobutyl-n-butylester, Cyclohexan-1,4-dicarbonsäureglycol-n-butylester, Cyclohexan-1,4-dicarbonsäure-n-hexyl-n-butylester, Cyclohexan-1,4-dicarbonsäureisohexyl-n-butylester, Cyclohexan-1,4-dicarbonsäure-n-heptyl-n-butylester, Cyclohexan-1,4-dicarbonsäureisoheptyl-n-butyl-ester, Cyclohexan-1,4-dicarbonsäure-n-octyln-butylester, Cyclohexan-1,4-dicarbonsäureisooctyl-n-butylester, Cyclohexan-1,4-dicarbonsäure-(2-ethylhexyl)-n-butylester, Cyclohexan-1,4-dicarbonsäure-n-nonyl-n-butylester, Cyclohexan-1,4-dicarbonsäureisononyl-n-butylester, Cyclohexan-1,4-dicarbonsäure-(2-propylheptyl)-n-butylester, Cyclohexan-1,4-dicarbonsäure-n-decyl-n-butylester, Cyclohexan-1,4-dicarbonsäureisodecyl-n-butylester, Cyclohexan-1,4-dicarbonsäure-n-undecyl-n-butylester, Cyclohexan-1,4-dicarbonsäureisoundecyl-n-butylester, Cyclohexan-1,4-dicarbonsäure-n-docecyl-n-butylester, Cyclohexan-1,4-dicarbonsäureisododecyl-n-butylester, Cyclohexan-1,4-dicarbonsäure-n-tride-cyl-n-butylester, Cyclohexan-1,4-dicarbonsäureisotridecyl-n-butylester, Cyclohexan-1,4-dicarbonsäureisobutyl-tert-butylester, Cyclohexan-1,4-dicarbonsäureglycol-tert-butylester, Cyclohexan-1,4-dicarbonsäure-n-hexyl-tert-butylester, Cyclohexan-1,4-dicarbonsäureisohexyl-tert-butylester, Cyclohexan-1,4-dicarbonsäure-n-heptyl-tert-butylester, Cyclohexan-1,4-dicarbonsäureisoheptyl-tert-butylester, Cyclohexan-1,4-dicarbonsäure-n-octyl-tert-butylester, Cyclohexan-1,4-dicarbonsäureisooctyl-tert-butyl-ester, Cyclohexan-1,4-dicarbonsäure-(2-ethylhexyl)-tert-butylester, Cyclohexan-1,4-dicarbonsäure-n-nonyl-tert-butylester, Cyclohexan-1,4-dicarbonsäureisononyl-tert-butyl-ester, Cyclohexan-1,4-dicarbonsäure-(2-propylheptyl)-tert-butylester, Cyclohexan-1,4-dicarbonsäure-n-decyl-tert-butylester, Cyclohexan-1,4-dicarbonsäureisodecyl-tert-butyl-ester, Cyclohexan-1,4-dicarbonsäure-n-undecyl-tert-butylester, Cyclohexan-1,4-dicarbonsäureisoundecyl-tert-butylester, Cyclohexan-1,4-dicarbonsäure-n-docecyl-tert-butylester, Cyclohexan-1,4-dicarbonsäureisododecyl-tert-butylester, Cyclohexan-1,4-dicarbonsäure-n-tridecyl-tert-butylester, Cyclohexan-1,4-dicarbonsäureisotridecyl-tert-butylester, Cyclohexan-1,4-dicarbonsäureglycolisobutylester, Cyclohexan-1,4-dicarbonsäure-n-hexyliso-butylester, Cyclohexan-1,4-dicarbonsäureisohexylisobutylester, Cyclohexan-1,4-dicarbonsäure-n-heptylisobutylester, Cyclohexan-1,4-dicarbonsäureisoheptylisobutylester, Cyclohexan-1,4-dicarbonsäure-n-octylisobutylester, Cyclohexan-1,4-dicarbonsäureisooctyl-isobutylester, Cyclohexan-1,4-dicarbonsäure-(2-ethylhexyl)isobutylester, Cyclohexan-1,4-dicarbonsäure-n-nonylisobutylester, Cyclohexan-1,4-dicarbonsäureisononylisobutylester, Cyclohexan-1,4-dicarbonsäure-(2-propylheptyl)isobutylester, Cyclohexan-1,4-dicarbonsäure-n-decylisobutylester, Cyclohexan-1,4-dicarbonsäureisodecylisobutylester, Cyclohexan-1,4-dicarbonsäure-n-undecylisobutylester, Cyclohexan-1,4-dicarbonsäureisoundecylisobutylester, Cyclohexan-1,4-dicarbonsäure-n-docecylisobutylester, Cyclohexan-1,4-dicarbonsäureisododecylisobutylester, Cyclohexan-1,4-dicarbonsäure-n-tridecyl-isobutylester, Cyclohexan-1,4-dicarbonsäureisotridecylisobutylester, Cyclohexan-1,4-dicarbonsäure-n-hexylglycolester, Cyclohexan-1,4-dicarbonsäureisohexylglycolester, Cyclohexan-1,4-dicarbonsäure-n-heptylglycolester, Cyclohexan-1,4-dicarbonsäureisoheptylglycolester, Cyclohexan-1,4-dicarbonsäure-n-octylglycolester, Cyclohexan-1,4-dicarbonsäureisooctylglycolester, Cyclohexan-1,4-dicarbonsäure-(2-ethylhexyl)glycol-ester, Cyclohexan-1,4-dicarbonsäure-n-nonylglycolester, Cyclohexan-1,4-dicarbonsäureisononylglycolester, Cyclohexan-1,4-dicarbonsäure-(2-propylheptyl)glycolester, Cyclohexan-1,4-dicarbonsäure-n-decylglycolester, Cyclohexan-1,4-dicarbonsäureisodecylgly-colester, Cyclohexan-1,4-dicarbonsäure-n-undecylglycolester, Cyclohexan-1,4-dicarbonsäureisoundecylglycolester, Cyclohexan-1,4-dicarbonsäure-n-docecylglycolester, Cyclohexan-1,4-dicarbonsäureisododecylglycolester, Cyclohexan-1,4-dicarbonsäure-n-tride-cylglycolester, Cyclohexan-1,4-dicarbonsäureisotridecylglycolester, Cyclohexan-1,4-dicarbonsäureisohexyl-n-hexylester, Cyclohexan-1,4-dicarbonsäure-n-heptyl-n-hexyl-ester, Cyclohexan-1,4-dicarbonsäureisoheptyl-n-hexylester, Cyclohexan-1,4-dicarbonsäure-n-octyl-n-hexylester, Cyclohexan-1,4-dicarbonsäureisooctyl-n-hexylester, Cyclohexan-1,4-dicarbonsäure-(2-ethylhexyl)-n-hexylester, Cyclohexan-1,4-dicarbonsäure-n-nonyl-n-hexylester, Cyclohexan-1,4-dicarbonsäureisononyl-n-hexylester, Cyclohexan-1,4-dicarbonsäure-(2-propylheptyl)-n-hexylester, Cyclohexan-1,4-dicarbonsäure-n-decyl-n-hexylester, Cyclohexan-1,4-dicarbonsäureisodecyl-n-hexylester, Cyclohexan-1,4-dicarbonsäure-n-undecyl-n-hexyl-ester, Cyclohexan-1,4-dicarbonsäureisoundecyl-n-hexylester, Cyclohexan-1,4-dicarbonsäure-n-docecyl-n-hexylester, Cyclohexan-1,4-dicarbonsäureisododecyl-n-hexylester, Cyclohexan-1,4-dicarbonsäure-n-tridecyl-n-hexylester, Cyclohexan-1,4-dicarbonsäureisotridecyl-n-hexylester, Cyclohexan-1,4-dicarbonsäure-n-heptylisohexylester, Cyclohexan-1,4-dicarbonsäureisoheptylisohexylester, Cyclohexan-1,4-dicarbonsäure-n-octyl-isohexylester, Cyclohexan-1,4-dicarbonsäureisooctylisohexylester, Cyclohexan-1,4-dicarbonsäure-(2-ethylhexyl)isohexylester, Cyclohexan-1,4-dicarbonsäure-n-nonyliso-hexylester, Cyclohexan-1,4-dicarbonsäureisononylisohexylester, Cyclohexan-1,4-dicarbonsäure-(2-propylheptyl)isohexylester, Cyclohexan-1,4-dicarbonsäure-n-decyliso-hexylester, Cyclohexan-1,4-dicarbonsäureisodecylisohexylester, Cyclohexan-1,4-dicarbonsäure-n-undecylisohexylester, Cyclohexan-1,4-dicarbonsäureisoundecyliso-hexylester, Cyclohexan-1,4-dicarbonsäure-n-docecylisohexylester, Cyclohexan-1,4-dicarbonsäureisododecylisohexylester, Cyclohexan-1,4-dicarbonsäure-n-tridecylisohexyl-ester, Cyclohexan-1,4-dicarbonsäureisotridecylisohexylester, Cyclohexan-1,4-dicarbonsäureisoheptyl-n-heptylester, Cyclohexan-1,4-dicarbonsäure-n-oetyl-n-heptylester, Cyclohexan-1,4-dicarbonsäureisooctyl-n-heptylester, Cyclohexan-1,4-dicarbonsäure-(2-ethyl-hexyl)-n-heptylester, Cyclohexan-1,4-dicarbonsäure-n-nonyl-n-heptylester, Cyclohexan-1,4-dicarbonsäureisononyl-n-heptylester, Cyclohexan-1,4-dicarbonsäure-(2-propylheptyl)-n-heptylester, Cyclohexan-1,4-dicarbonsäure-n-decyl-n-heptylester, Cyclohexan-1,4-dicarbonsäureisodecyl-n-heptylester, Cyclohexan-1,4-dicarbonsäure-n-undecyl-n-heptylester, Cyclohexan-1,4-dicarbonsäureisoundecyl-n-heptylester, Cyclohexan-1,4-dicarbonsäure-n-docecyl-n-heptylester, Cyclohexan-1,4-dicarbonsäureisododecyl-n-heptylester, Cyclohexan-1,4-dicarbonsäure-n-tridecyl-n-heptylester, Cyclohexan-1,4-dicarbonsäureisotridecyl-n-heptylester, Cyclohexan-1,4-dicarbonsäure-n-octylisoheptyl-ester, Cyclohexan-1,4-dicarbonsäureisooctylisoheptylester, Cyclohexan-1,4-dicarbonsäure-(2-ethylhexyl)isoheptylester, Cyclohexan-1,4-dicarbonsäure-n-nonylisoheptylester, Cyclohexan-1,4-dicarbonsäureisononylisoheptylester, Cyclohexan-1,4-dicarbonsäure-(2-propylheptyl)isoheptylester, Cyclohexan-1,4-dicarbonsäure-n-decylisoheptylester, Cyclohexan-1,4-dicarbonsäureisodecylisoheptylester, Cyclohexan-1,4-dicarbonsäure-n-undecylisoheptylester, Cyclohexan-1,4-dicarbonsäureisoundecylisoheptylester, Cyclohexan-1,4-dicarbonsäure-n-docecylisoheptylester, Cyclohexan-1,4-dicarbonsäureisodo-decylisoheptylester, Cyclohexan-1,4-dicarbonsäure-n-tridecylisoheptylester, Cyclohexan-1,4-dicarbonsäureisotridecylisoheptylester, Cyclohexan-1,4-dicarbonsäureisooctyl-n-octylester, Cyclohexan-1,4-dicarbonsäure-(2-ethylhexyl)-n-octylester, Cyclohexan-1,4-dicarbonsäure-n-nonyl-n-octylester, Cyclohexan-1,4-dicarbonsäureisononyl-n-octylester, Cyclohexan-1,4-dicarbonsäure-(2-propylheptyl)-n-octylester, Cyclohexan-1,4-dicarbonsäure-n-decyl-n-octylester, Cyclohexan-1,4-dicarbonsäureisodecyl-n-octylester, Cyclohexan-1,4-dicarbonsäure-n-undecyl-n-octylester, Cyclohexan-1,4-dicarbonsäureisoundecyl-n-octylester, Cyclohexan-1,4-dicarbonsäure-n-docecyl-n-octylester, Cyclohexan-1,4-dicarbonsäureisododecyl-n-octylester, Cyclohexan-1,4-di-carbonsäure-n-tridecyl-n-octylester, CycIohexan-1,4-dicarbonsäureisotridecyl-n-octyl-ester, Cyclohexan-1,4-dicarbonsäure-(2-ethylhexyl)isooctylester, Cyclohexan-1,4-di-carbonsäure-n-nonylisooctylester, Cyclohexan-1,4-dicarbonsäureisononylisooctylester, Cyclohexan-1,4-dicarbonsäure-(2-propylheptyl)isooctylester, Cyclohexan-1,4-dicarbonsäure-n-decylisooctylester, Cyclohexan-1,4-dicarbonsäureisodecylisooctylester, Cyclohexan-1,4-dicarbonsäure-n-undecylisooctylester, Cyclohexan-1,4-dicarbonsäureisoun-decylisooctylester, Cyclohexan-1,4-dicarbonsäure-n-docecylisooctylester, Cyclohexan-1,4-dicarbonsäureisododecylisooctylester, Cyclohexan-1,4-dicarbonsäure-n-tridecyl-isooctylester, Cyclohexan-1,4-dicarbonsäureisotridecylisooctylester, Cyclohexan-1,4-dicarbonsäure-n-nonyl-(2-ethylhexyl)ester, Cyclohexan-1,4-dicarbonsäureisononyl-(2-ethylhexyl)ester, Cyclohexan-1,4-dicarbonsäure-(2-propylheptyl)-(2-ethylhexyl)ester, Cyclohexan-1,4-dicarbonsäure-n-decyl-(2-ethylhexyl)ester, Cyclohexan-1,4-dicarbonsäureisodecyl-(2-ethylhexyl)ester, Cyclohexan-1,4-dicarbonsäure-n-undecyl-(2-ethyl-hexyl)ester, Cyclohexan-1,4-dicarbonsäureisoundecyl-(2-ethylhexyl)ester, Cyclohexan-1,4-dicarbonsäure-n-docecyl-(2-ethylhexyl)ester, Cyclohexan-1,4-dicarbonsäureisodo-decyl-(2-ethylhexyl)ester, Cyclohexan-1,4-dicarbonsäure-n-tridecyl-(2-ethylhexyl)ester, Cyclohexan-1,4-dicarbonsäureisotridecyl-(2-ethylhexyl)ester, Cyclohexan-1,4-dicarbonsäureisononyl-n-nonylester, Cyclohexan-1,4-dicarbonsäure-(2-propylheptyl)-n-nonyl-ester, Cyclohexan-1,4-dicarbonsäure-n-decyl-n-nonylester, Cyclohexan-1,4-dicarbonsäureisodecyl-n-nonylester, Cyclohexan-1,4-dicarbonsäure-n-undecyl-n-nonylester, Cyclohexan-1,4-dicarbonsäureisoundecyl-n-nonylester, Cyclohexan-1,4-dicarbonsäure-n-docecyl-n-nonylester, Cyclohexan-1,4-dicarbonsäureisododecyl-n-nonylester, Cyclohexan-1,4-dicarbonsäure-n-tridecyl-n-nonylester, Cyclohexan-1,4-dicarbonsäureisotri-decyl-n-nonylester, Cyclohexan-1,4-dicarbonsäure-(2-propylheptyl)isononylester, Cyclohexan-1,4-dicarbonsäure-n-decylisononylester, Cyclohexan-1,4-dicarbonsäureisode-cylisononylester, Cyclohexan-1,4-dicarbonsäure-n-undecylisononylester, Cyclohexan-1,4-dicarbonsäureisoundecylisononylester, Cyclohexan-1,4-dicarbonsäure-n-docecyliso-nonylester, Cyclohexan-1,4-dicarbonsäureisododecylisononylester, Cyclohexan-1,4-dicarbonsäure-n-tridecylisononylester, Cyclohexan-1,4-dicarbonsäureisotridecyliso-nonylester, Cyclohexan-1,4-dicarbonsäure-n-decyl-(2-propylheptyl)ester, Cyclohexan-1,4-dicarbonsäureisodecyl-(2-propylheptyl)ester, Cyclohexan-1,4-dicarbonsäure-n-undecyl-(2-propylheptyl)ester, Cyclohexan-1,4-dicarbonsäureisoundecyl-(2-propylheptyl)ester, Cyclohexan-1,4-dicarbonsäure-n-docecyl-(2-propylheptyl)ester, Cyclohexan-1,4-dicarbonsäureisododecyl-(2-propylheptyl)ester, Cyclohexan-1,4-dicarbonsäure-n-tridecyl-(2-propylheptyl)ester, Cyclohexan-1,4-dicarbonsäureisotridecyl-(2-propylheptyl)ester, Cyclohexan-1,4-dicarbonsäureisodecyl-n-decylester, Cyclohexan-1,4-dicarbonsäure-n-undecyl-n-decylester, Cyclohexan-1,4-dicarbonsäureisoundecyl-n-decylester, Cyclohexan-1,4-dicarbonsäure-n-docecyl-n-decylester, Cyclohexan-1,4-dicarbonsäureisododecyl-n-decylester, Cyclohexan-1,4-dicarbonsäure-n-tridecyl-n-decylester, Cyclohexan-1,4-dicarbonsäureisotridecyl-n-decylester, Cyclohexan-1,4-dicarbonsäure-n-undecylisodecylester, Cyclohexan-1,4-dicarbonsäureisoundecylisodecylester, Cyclohexan- 4-dicarbonsäure-n-docecyliso-decylester, Cyclohexan-1,4-dicarbonsäureisododecylisodecylester, Cyclohexan-1,4-dicarbonsäure-n-tridecylisodecylester, Cyclohexan-1,4-dicarbonsäureisotridecyliso-decylester, Cyclohexan-1,4-dicarbonsäureisoundecyl-n-undecylester, Cyclohexan-1,4-dicarbonsäure-n-docecyl-n-undecylester, Cyclohexan-1,4-dicarbonsäureisododecyl-n-undecylester, Cyclohexan-1,4-dicarbonsäure-n-tridecyl-n-undecylester, Cyclohexan-1,4-dicarbonsäureisotridecyl-n-undecylester, Cyclohexan-1,4-dicarbonsäure-n-docecyliso-undecylester, Cyclohexan-1,4-dicarbonsäureisododecylisoundecylester, Cyclohexan-1,4-dicarbonsäure-n-tridecylisoundecylester, Cyclohexan-1,4-dicarbonsäureisotridecyliso-undecylester, Cyclohexan-1,4-dicarbonsäureisododecyl-n-dodecylester, Cyclohexan-1,4-dicarbonsäure-n-tridecyl-n-dodecylester, Cyclohexan- 1,4-dicarbonsäureisotridecyl-n-dodecylester, Cyclohexan-1,4-dicarbonsäure-n-tridecylisododecylester, Cyclohexan-1,4-dicarbonsäureisotridecylisododecylester, Cyclohexan-1,4-dicarbonsäureisotridecyl-n-tridecylester, Cyclohexan-1,4-dicarbonsäuremethylcyclohexylester, Cyclohexan-1,4-dicarbonsäureethylcyclohexylester, Cyclohexan-1,4-dicarbonsäure-n-propylcyclo-hexylester, Cyclohexan-1,4-dicarbonsäureisopropylcyclohexylester, Cyclohexan-1,4-dicarbonsäure-n-butylcyclohexylester, Cyclohexan-1,4-dicarbonsäure-tert-butylcyclo-hexylester, Cyclohexan-1,4-dicarbonsäureisobutylcyclohexylester, Cyclohexan-1,4-dicarbonsäureglycolcyclohexylester, Cyclohexan-1,4-dicarbonsäure-n-hexylcyclohexyl-ester, Cyclohexan-1,4-dicarbonsäureisohexylcyclohexylester, Cyclohexan-1,4-dicarbonsäure-n-heptylcyclohexylester, Cyclohexan-1,4-dicarbonsäureisoheptylcyclohexylester, Cyclohexan-1,4-dicarbonsäure-n-octylcyclohexylester, Cyclohexan-1,4-dicarbonsäureisooctylcyclohexylester, Cyclohexan-1,4-dicarbonsäure-(2-ethylhexyl)cyclohexylester, Cyclohexan-1,4-dicarbonsäure-n-nonylcyclohexylester, Cyclohexan-1,4-dicarbonsäureisononylcyclohexylester, Cyclohexan-1,4-dicarbonsäure-(2-propylheptyl)cyclohexylester, Cyclohexan-1,4-dicarbonsäure-n-decylcyclohexylester, Cyclohexan-1,4-dicarbonsäureisodecylcyclohexylester, Cyclohexan-1,4-dicarbonsäure-n-undecylcyclohexylester, Cyclohexan-1,4-dicarbonsäureisoundecylcyclohexylester, Cyclohexan-1,4-dicarbonsäure-n-docecylcyclohexylester, Cyclohexan-1,4-dicarbonsäureisododecylcyclohexylester, Cyclohexan-1,4-dicarbonsäure-n-tridecylcyclohexylester, Cyclohexan-1,4-dicarbonsäureisotridecylcyclohexylester, Cyclohexan-1,4-dicarbonsäuremethylisopentylester, Cyclohexan-1,4-dicarbonsäureethylisopentylester, Cyclohexan-1,4-dicarbonsäure-n-propylisopentylester, Cyclohexan-1,4-dicarbonsäureisopropylisopentylester, Cyclohexan-1,4-dicarbonsäure-n-butyliso-pentylester, Cyclohexan-1,4-dicarbonsäure-tert-butylisopentylester, Cyclohexan-1,4-dicarbonsäureisobutylisopentylester, Cyclohexan-1,4-dicarbonsäureglycolisopentylester, Cyclohexan-1,4-dicarbonsäure-n-hexylisopentylester, Cyclohexan-1,4-dicarbonsäureisohexylisopentylester, Cyclohexan-1,4-dicarbonsäure-n-heptylisopentylester, Cyclohexan-1,4-dicarbonsäureisoheptylisopentylester, Cyclohexan-1,4-dicarbonsäure-n-octyl-isopentylester, Cyclohexan-1,4-dicarbonsäureisooctylisopentylester, Cyclohexan-1,4-dicarbonsäure-(2-ethylhexyl)isopentylester, Cyclohexan-1,4-dicarbonsäure-n-nonyliso-pentylester, Cyclohexan-1,4-dicarbonsäureisononylisopentylester, Cyclohexan-1,4-dicarbonsäure-(2-propylheptyl)isopentylester, Cyclohexan-1,4-dicarbonsäure-n-decyl-isopentylester, Cyclohexan-1,4-dicarbonsäureisodecylisopentylester, Cyclohexan-1,4-dicarbonsäure-n-undecylisopentylester, Cyclohexan-1,4-dicarbonsäureisoundecyliso-pentylester, Cyclohexan-1,4-dicarbonsäure-n-docecylisopentylester, Cyclohexan-1,4-dicarbonsäureisododecylisopentylester, Cyclohexan-1,4-dicarbonsäure-n-tridecyliso-pentylester, Cyclohexan-1,4-dicarbonsäureisotridecylisopentylester, Cyclohexan-1,4-dicarbonsäuremethyl-n-pentylester, Cyclohexan-1,4-dicarbonsäureethyl-n-pentylester, Cyclohexan-1,4-dicarbonsäure-n-propyl-n-pentylester, Cyclohexan-1,4-dicarbonsäureisopropyl-n-pentylester, Cyclohexan-1,4-dicarbonsäure-n-butyl-n-pentyl-ester, Cyclohexan-1,4-dicarbonsäure-tert-butyl-n-pentylester, Cyclohexan-1,4-dicarbonsäureisobutyl-n-pentylester, Cyclohexan-1,4-dicarbonsäureglycol-n-pentylester, Cyclohexan-1,4-dicarbonsäure-n-hexyl-n-pentylester, Cyclohexan-1,4-dicarbonsäureisohexyl-n-pentylester, Cyclohexan-1,4-dicarbonsäure-n-heptyl-n-pentylester, Cyclohexan-1,4-dicarbonsäureisoheptyl-n-pentylester, Cyclohexan-1,4-dicarbonsäure-n-octyl-n-pentyl-ester, Cyclohexan-1,4-dicarbonsäureisooctyl-n-pentylester, Cyclohexan-1,4-dicarbonsäure-(2-ethylhexyl)-n-pentylester, Cyclohexan-1,4-dicarbonsäure-n-nonyl-n-pentylester, Cyclohexan-1,4-dicarbonsäureisononyl-n-pentylester, Cyclohexan-1,4-dicarbonsäure-(2-propylheptyl)-n-pentylester, Cyclohexan-1,4-dicarbonsäure-n-decyl-n-pentylester, Cyclohexan-1,4-dicarbonsäureisodecyl-n-pentylester, Cyclohexan-1,4-dicarbonsäure-n-undecyl-n-pentylester, Cyclohexan-1,4-dicarbonsäureisoundecyl-n-pentylester, Cyclohexan-1,4-dicarbonsäure-n-docecyl-n-pentylester, Cyclohexan-1,4-dicarbonsäureisodo-decyl-n-pentylester, Cyclohexan-1,4-dicarbonsäure-n-tridecyl-n-pentylester, Cyclohexan-1,4-dicarbonsäureisotridecyl-n-pentylester; Cyclohexan-1,3-dicarbonsäurealkylester, wie z.B. Cyclohexan-1,3-dicarbonsäuremonomethylester, Cyclohexan-1,3-dicarbonsäuredimethylester, Cyclohexan-1,3-dicarbonsäurediethylester, Cyclohexan-1,3-dicarbonsäuredi-n-propylester, Cyclohexan-1,3-dicarbonsäuredi-n-butylester, Cyclohexan-1,3-dicarbonsäuredi-tert.-butylester, Cyclohexan-1,3-dicarbonsäurediisobutylester, Cyclohexan-1,3-dicarbonsäuremonoglykolester, Cyclohexan-1,3-dicarbonsäurediglykolester, Cyclohexan-1,3-dicarbonsäuredi-n-octylester, Cyclohexan-1,3-dicarbonsäurediisooctylester, Cyclohexan-1,3-dicarbonsäuredi-2-ethylhexylester, Cyclohexan-1,3-dicarbonsäuredi-n-nonylester, Cyclohexan-1,3-dicarbonsäurediisononylester, Cyclohexan-1,3-dicarbonsäuredi-n-decylester, Cyclohexan-1,3-dicarbonsäurediisodecylester, Cyclohexan-1,3-dicarbonsäuredi-n-undecylester, Cyclohexan-1,3-dicarbonsäurediisododecylester, Cyclohexan-1,3-dicarbonsäuredi-n-octa-decylester, Cyclohexan-1,3-dicarbonsäurediisooctadecylester, Cyclohexan-1,3-dicarbonsäuredi-n-eicosylester, Cyclohexan-1,3-dicarbonsäuremonocyclohexylester, Cyclohexan-1,3-dicarbonsäuredicyclohexylester. Cyclohexan-1,3-dicarbonsäurediisopropylester, Cyelohexan-1,3-dicarbonsäureädi-n-hexylester, Cyclohexan-1,3-dicarbonsäurediiso-hexylester, Cyclohexan-1,3-dicarbonsäuredi-n-heptylester, Cyclohexan-1,3-dicarbonsäurediisoheptylester, Cyclohexan-1,3-dicarbonsäuredi-2-propylheptylester, Cyclohexan-1,3-dicarbonsäurediisoundecylester, Cyclohexan-1,3-dicarbonsäuredi-n-dodecylester, Cyclohexan-1,2-dicarbonsäuredi-n-tridecylester, Cyclohexan-1,3-dicarbonsäurediiso-tridecylester, Cyclohexan-1,3-dicarbonsäuredi-n-pentylester, Cyclohexan-1,3-dicarbonsäurediisopentylester;
Cyclohexan-1,2,4-tricarbonsäurealkylester, wie z.B. Cyclohexan-1,2,4-tricarbonsäuremonomethylester, Cyclohexan-1,2,4-tricarbonsäuredimethylester, Cyclohexan-1,2,4-tricarbonsäurediethylester, Cyclohexan-1,2,4-tricarbonsäuredi-n-propylester, Cyclohexan-1,2,4-tricarbonsäurediisopropylester, Cyclohexan-1,2,4-tricarbonsäuredi-n-butylester, Cyclohexan-1,2,4-tricarbonsäuredi-tert-butylester, Cyclohexan-1,2,4-tricarbonsäurediisobutylester, Cyclohexan-1,2,4-tricarbonsäuremonoglykolester, Cyclohexan-1,2,4-tricarbonsäurediglykolester, Cyclohexan-1,2,4-tricarbonsäuredi-n-octylester, Cyclohexan-1,2,4-tricarbonsäurediisooctylester, Cyclohexan-1,2,4-tricarbonsäuredi-2-ethylhexylester, Cyclohexan-1,2,4-tricarbonsäuredi-n-nonylester, Cyclohexan-1,2,4-tricarbonsäurediisononylester, Cyclohexan- 1,2,4-tricarbonsäuredi-n-decylester, Cyclohexan-1,2,4-tricarbonsäurediisodecylester, Cyclohexan-1,2,4-tricarbonsäuredi-n-undecyl-ester, Cyclohexan-1,2,4-tricarbonsäurediisododecylester, Cyclohexan-1,2,4-tricarbonsäuredi-n-octadecyl-ester, Cyclohexan-1,2,4-tricarbonsäurediisooctadecylester, Cyclohexan-1,2,4-tricarbonsäuredi-n-eicosylester. Cyclohexan-1,2,4-tricarbonsäuremonocyclo-hexylester, Cyclohexan-1,2,4-tricarbonsäuredicyclohexylester sowie Cyclohexan-1,2,4-tricarbonsäuretrimethylester, Cyclohexan-1,2,4-tricarbonsäuretriethylester, Cyclohexan-1,2,4-tricarbonsäuretri-n-propylester, Cyclohexan-1,2,4-tricarbonsäuretri-n-butylester, Cyclohexan-1,2,4-tricarbonsäuretri-tert-butylester, Cyclohexan-1,2,4-tricarbonsäuretriisobutylester, Cyclohexan-1,2,4-tricarbonsäuretriglykolester, Cyclohexan-1,2,4-tricarbonsäuretri-n-octylester, Cyclohexan-1,2,4-tricarbonsäuretriisooctylester, Cyclohexan-1,2,4-tricarbonsäuretri-2-ethylhexylester, Cyclohexan-1,2,4-tricarbonsäuretri-n-nonylester, Cyclohexan-1,2,4-tricarbonsäuretriisononyl-ester, Cyclohexan-1,2,4-tricarbonsäuretri-n-decylester, Cyclohexan-1,2,4-tricarbonsäuretriisododecylester, Cyclohexan-1,2,4-tricarbonsäuretri-n-undecylester, Cyclohexan-1,2,4-tricarbonsäuretriisododecylester, Cyclohexan-1,2,4-tricarbonsäuretri-n-octadecyl-ester, Cyclohexan-1,2,4-tricarbonsäure-triisooctadecylester, Cyclohexan-1,2,4-tricarbonsäuretri-n-eicosylester, Cyclohexan-1,2,4-tricarbonsäuretricyclohexylester, Cyclohexan-1,2,4-tricarbonsäuredi-n-hexylester, Cyclohexan-1,2,4-tricarbonsäurediisohexylester, Cyclohexan-1,2,4-tricarbonsäuretri-n-hexylester, Cyclohexan-1,2,4-tricarbonsäuretriiso-hexylester, Cyclohexan-1,2,4-tricarbonsäuredi-n-heptylester, Cyclohexan-1,2,4-tricarbonsäurediisoheptylester, Cyclohexan-1,2,4-tricarbonsäuretri-n-heptylester, Cyclohexan-1,2,4-tricarbonsäuretriisoheptylester, Cyclohexan-1,2,4-tricarbonsäuredi-n-pentylester, Cyclohexan-1,2,4-tricarbonsäurediisopentylester, Cyclohexan-1,2,4-tricarbonsäuretri-n-pentyl-ester, Cyclohexan-1,2,4-tricarbonsäuretriisopentylester, Cyclohexan-1,2,4-tricarbonsäuredi-n-tridecylester, Cyclohexan-1,2,4-tricarbonsäurediisotridecylester, Cyclohexan-1,2,4-tricarbonsäuretri-n-tridecylester, Cyclohexan-1,2,4-tricarbonsäuretriisotridecylester, Cyclohexan-1,2,4-tricarbonsäuredi-n-dodecylester, Cyclohexan-1,2,4-tricarbonsäure-diisoundecylester, Cyclohexan-1,2,4-tricarbonsäuretri-n-dodecylester, Cyclohexan-1,2,4-tricarbonsäuretriisoundecylester, Cyclohexan-1,2,4-tricarbonsäuretriisopropylester.
Cyclohexan-1,3,5-tricarbonsäurealkylester, wie z.B. Cyclohexan-1,3,5-tricarbonsäuremonomethylester, Cyclohexan-1,3,5-tricarbonsäuredimethylester, Cyclohexan-1,3,5-tricarbonsäurediethylester, Cyclohexan-1,3,5-tricarbonsäuredi-n-propylester, Cyclohexan-1,3,5-tricarbonsäuredi-n-butylester, Cyclohexan-1,3,5-tricarbonsäuredi-tert-butylester, Cyclohexan-1,3,5-tricarbonsäurediisobutylester, Cyclohexan-1,3,5-tricarbonsäuremonoglykolester, Cyclohexan-1,3,5-tricarbonsäurediglykolester, Cyclohexan-1,3,5-tricarbonsäuredi-n-octylester, Cyclohexan-1,3,5-tricarbonsäurediisooctylester, Cyclohexan-1,3,5-tricarbonsäuredi-2-ethylhexylester, Cyclohexan-1,3,5-tricarbonsäuredi-n-nonylester, Cyclohexan-1,3,5-tricarbonsäurediisononylester, Cyclohexan-1,3,5-tricarbonsäuredi-n-decylester, Cyclohexan-1,3,5-tricarbonsäurediisodecylester, Cyclohexan-1,3,5-tricarbonsäuredi-n-undecylester, Cyclohexan-1,3,5-tricarbonsäurediisododecylester, Cyclohexan-1,3,5-tricarbonsäuredi-n-octadecylester, Cyclohexan-1,3,5-tricarbonsäure-diisooctadecylester, Cyclohexan-1,3,5-tricarbonsäuredi-n-eicosylester, Cyclohexan-1,3,5-tricarbonsäuremonocyclohexylester, Cyclohexan-1,3,5-tricarbonsäuredicyclohexylester, sowie Cyclohexan-1,3,5-tricarbonsäuretrimethylester, Cyclohexan-1,3,5-tricarbonsäuretriethylester, Cyclohexan-1,3,5-tricarbonsäuretri-n-propylester, Cyclohexan-1,3,5-tricarbonsäuretri-n-butylester, Cyclohexan-1,3,5-tricarbonsäuretri-tert-butyl-ester, Cyclohexan-1,3,5-tricarbonsäuretriisobutylester, Cyclohexan-1,3,5-tricarbonsäuretriglykolester, Cyclohexan-1,3,5-tricarbonsäuretri-n-octylester, Cyclohexan-1,3,5-tricarbonsäuretriisooctylester, Cyclohexan-1,3,5-tricarbonsäuretri-2-ethylhexylester, Cyclohexan-1,3,5-tricarbonsäuretri-n-nonylester, Cyclohexan-1,3,5-tricarbonsäuretriisononylester, Cyclohexan-1,3,5-tricarbonsäuretri-n-decylester, Cyclohexan-1,3,5-tricarbonsäuretriisododecylester, Cyclohexan-1,3,5-tricarbonsäuretri-n-undecylester, Cyclohexan-1,3,5-tricarbonsäuretriisododecylester, Cyclohexan-1,3,5-tricarbonsäuretri-n-octadecylester, Cyclohexan-1,3,5-tricarbonsäuretriisooctadecylester, Cyclohexan-1,3,5-tricarbonsäuretri-n-eicosylester, Cyclohexan-1,3,5-tricarbonsäuretri-cyclohexylester, Cyclohexan-1,3,5-tricarbonsäuredi-n-hexylester, Cyclohexan-1,3,5-tricarbonsäurediisohexylester, Cyclohexan-1,3,5-tricarbonsäuretri-n-hexylester, Cyclohexan-1,3,5-tricarbonsäuretriisohexylester, Cyclohexan-1,3,5-tricarbonsäuredi-n-heptyl-ester, Cyclohexan-1,3,5-tricarbonsäurediisoheptylester, Cyclohexan-1,3,5-tricarbonsäuretri-n-heptylester, Cyclohexan-1,3,5-tricarbonsäuretriisoheptylester, Cyclohexan-1,3,5-tricarbonsäuredi-n-pentylester, Cyclohexan-1,3,5-tricarbonsäurediisopentylester, Cyclohexan-1,3,5-tricarbonsäuretri-n-pentylester, Cyclohexan-1,3,5-tricarbonsäure-triisopentylester, Cyclohexan-1,3,5-tricarbonsäuredi-n-tridecylester, Cyclohexan-1,3,5-tricarbonsäurediisotridecylester, Cyclohexan-1,3,5-tricarbonsäuretri-n-tridecylester, Cyclohexan-1,3,5-tricarbonsäuretriisotridecylester, Cyclohexan-1,3,5-tricarbonsäuredi-n-dode-cylester, Cyclohexan-1,3,5-tricarbonsäurediisoundecylester, Cyclohexan-1,3,5-tricarbonsäuretri-n-dodecylester, Cyclohexan-1,3,5-tricarbonsäuretriisoundecylester, Cyclohexan-1,3,5-tricarbonsäuretriisopropylester. Cyclohexan-1,2,3-tricarbonsäurealkylester, wie z.B. Cyclohexan-1,2,3-tricarbonsäuremonomethylester, Cyclohexan-1,2,3-tricarbonsäuredimethylester, Cyclohexan-1,2,3-tricarbonsäurediethylester, Cyclohexan-1,2,3-tricarbonsäuredi-n-propylester, Cyclohexan-1,2,3-tricarbonsäuredi-n-butylester, Cyclohexan-1,2,3-tricarbonsäuredi-tert-butylester, Cyclohexan-1,2,3-tricarbonsäurediiso-butylester, Cyclohexan-1,2,3-tricarbonsäuremonoglykolester, Cyclohexan-1,2,3-tricarbonsäurediglykolester, Cyclohexan-1,2,3-tricarbonsäuredi-n-octylester, Cyclohexan-1,2,3-tricarbonsäurediisooctylester, Cyclohexan-1,2,3-tricarbonsäuredi-2-ethylhexylester, Cyclohexan-1,2,3-tricarbonsäuredi-n-nonylester, Cyclohexan-1,2,3-tricarbonsäurediisononyl-ester, Cyclohexan-1,2,3-tricarbonsäuredi-n-decylester, Cyclohexan-1,2,3-tricarbonsäurediisodecylester, Cyclohexan-1,2,3-tricarbonsäuredi-n-undecylester, Cyclohexan-1,2,3-tricarbonsäurediisododecylester, Cyclohexan-1,2,3-tricarbonsäuredi-n-octadecylester, Cyclohexan-1,2,3-tricarbonsäurediisooctadecylester, Cyclohexan-1,2,3-tricarbonsäuredi-n-eicosylester, Cyclohexan-1,2,3-tricarbonsäuremonocyclohexylester, Cyclohexan-1,2,3-tricarbonsäuredicyclohexylester, sowie Cyclohexan-1,2,3-tricarbonsäuretrimethylester, Cyclohexan-1,2,3-tricarbonsäuretriethylester, Cyclohexan-1,2,3-tricarbonsäuretri-n-propylester, Cyclohexan-1,2,3-tricarbonsäuretri-n-butylester, Cyclohexan-1,2,3-tricarbonsäuretri-tert-butylester, Cyclohexan-1,2,3-tricarbonsäuretriisobutylester, Cyclohexan-1,2,3-tricarbonsäuretriglykolester, Cyclohexan-1,2,3-tricarbonsäuretri-n-octylester, Cyclohexan-1,2,3-tricarbonsäuretriisooctylester, Cyclohexan-1,2,3-tricarbonsäuretri-2-ethylhexylester, Cyclohexan-1,2,3-tricarbonsäuretri-n-nonylester, Cyclohexan-1,2,3-tricarbonsäuretriisononyl-ester, Cyclohexan-1,2,3-tricarbonsäuretri-n-decylester, Cyclohexan-1,2,3-tricarbonsäuretriisododecylester, Cyclohexan-1,2,3-tricarbonsäuretri-n-undecylester, Cyclohexan-1,2,3-tricarbonsäuretriisododecylester, Cyclohexan-1,2,3-tricarbonsäuretri-n-octadecyl-ester, Cyclohexan-1,2,3-tricarbonsäuretriisooctadecylester, Cyclohexan-1,2,3-tricarbonsäuretri-n-eicosylester, Cyclohexan-1,2,3-tricarbonsäuretricyclohexylester, Cyclohexan-1,2,3-tricarbonsäuredi-n-hexylester, Cyclohexan-1,2,3-tricarbonsäurediisohexylester, Cyclohexan-1,2,3-tricarbonsäuretri-n-hexylester, Cyclohexan-1,2,3-tricarbonsäure-triisohexylester, Cyclohexan-1,2,3-tricarbonsäuredi-n-heptylester, Cyclohexan-1,2,3-tricarbonsäurediisoheptylester, Cyclohexan-1,2,3-tricarbonsäuretri-n-heptylester, Cyclohexan-1,2,3-tricarbonsäuretriisoheptylester, Cyclohexan-1,2,3-tricarbonsäuredi-n-pentyl-ester, Cyclohexan-1,2,3-tricarbonsäurediisopentylester, Cyclohexan-1,2,3-tricarbonsäuretri-n-pentylester, Cyclohexan-1,2,3-tricarbonsäuretriisopentylester, Cyclohexan-1,2,3-tricarbonsäuredi-n-tridecylester, Cyclohexan-1,2,3-tricarbonsäurediisotridecylester, Cyclohexan-1,2,3-tricarbonsäuretri-n-tridecylester, Cyclohexan-1,2,3-tricarbonsäure-triisotridecylester, Cyclohexan-1,2,3-tricarbonsäuredi-n-dodecylester, Cyclohexan-1,2,3-tricarbonsäurediisoundecylester, Cyclohexan-1,2,3-tricarbonsäuretri-n-dodecylester, Cyclohexan-1,2,3-tricarbonsäuretriisoundecylester, Cyclohexan-1,2,3-tricarbonsäuretriiso-propylester. Cyclohexan-1,2,4,5-tetracarbonsäurealkylester, wie z.B. Cyclohexan-1,2,4,5-tetracarbonsäuremonomethylester, Cyclohexan-1,2,4,5-tetracarbonsäuredimethylester, Cyclohexan-1,2,4,5-tetracarbonsäurediethylester, Cyclohexan-1,2,4,5-tetracarbonsäuredi-n-propylester, Cyclohexan-1,2,4,5-tetracarbonsäuredi-n-butylester, Cyclohexan-1,2,4,5-tetracarbonsäuredi-tert.-butylester, Cyclohexan-1,2,4,5-tetracarbonsäurediisobutylester, Cyclohexan-1,2,4,5-tetracarbonsäuremonoglykolester, Cyclohexan-1,2,4,5-tetracarbonsäurediglykolester, Cyclohexan-1,2,4,5-tetracarbonsäuredi-n-octylester, Cyclohexan-1,2,4,5-tetracarbonsäurediisooctylester, Cyclohexan-1,2,4,5-tetracarbonsäuredi-2-ethylhexylester, Cyclohexan-1,2,4,5-tetracarbonsäuredi-n-nonylester, Cyclohexan-1,2,4,5-tetracarbonsäurediisononylester, Cyclohexan-1,2,4,5-tetracarbonsäuredi-n-decylester, Cyclohexan-1,2,4,5-tetracarbonsäurediisodecylester, Cyclohexan-1,2,4,5-tetracarbonsäuredi-n-undecylester, Cyclohexan-1,2,4,5-tetracarbonsäurediisododecylester, Cyclohexan-1,2,4,5-tetracarbonsäuredi-n-octadecylester, Cyclohexan-1,2,4,5-tetracarbonsäurediisooctadecylester, Cyclohexan-1,2,4,5-tetracarbonsäuredi-n-eicosylester, Cyclohexan- 1,2,4,5-tetracarbonsäuremonocyclohexylester, Cyclohexan-1,2,4,5-tetracarbonsäuretrimethylester, Cyclohexan-1,2,4,5-tetracarbonsäuretriethylester, Cyclohexan-1,2,4,5-tetracarbonsäuretri-n-propylester, Cyclohexan-1,2,4,5-tetracarbonsäuretri-n-butylester, Cyclohexan-1,2,4,5-tetracarbonsäuretri-tert-butylester, Cyclohexan-1,2,4,5-tetracarbonsäuretriisobutylester, Cyclohexan-1,2,4,5-tetracarbonsäuretriglykolester, Cyclohexan-1,2,4,5-tetracarbonsäuretri-n-octylester, Cyclohexan-1,2,4,5-tetracarbonsäuretriisooctylester, Cyclohexan-1,2,4,5-tetracarbonsäuretri-2-ethylhexylester, Cyclohexan-1,2,4,5-tetracarbonsäuretri-n-nonylester, Cyclohexan-1,2,4,5-tetracarbonsäuretriisononylester, Cyclohexan-1,2,4,5-tetracarbonsäuretri-n-decylester Cyclohexan-1,2,4,5-tetracarbonsäuretriisododecylester, Cyclohexan-1,2,4,5-tetracarbonsäuretri-n-undecylester, Cyclohexan-1,2,4,5-tetracarbonsäuretriisododecylester, Cyclohexan-1,2,4,5-tetracarbonsäuretri-n-octadecylester, Cyclohexan-1,2,4,5-tetracarbonsäure-triisooctadecylester, Cyclohexan-1,2,4,5-tetracarbonsäuretri-n-eicosylester, Cyclohexan-1,2,4,5-tetracarbonsäuretricyclohexylester, sowie Cyclohexan-1,2,4,5-tetracarbonsäuretetramethylester, Cyclohexan-1,2,4,5-tetracarbonsäuretetraethylester, Cyclohexan-1,2,4,5-tetracarbonsäuretetra-n-propylester, Cyclohexan-1,2,4,5-tetracarbonsäure-tetra-n-butylester, Cyclohexan-1,2,4,5-tetracarbonsäuretetra-tert-butylester, Cyclohexan-1,2,4,5-tetracarbonsäuretetraisobutylester, Cyclohexan-1,2,4,5-tetracarbonsäuretetra-glykolester, Cyclohexan-1,2,4,5-tetracarbonsäuretetra-n-octylester, Cyclohexan-1,2,4,5-tetracarbonsäuretetraisooctylester, Cyclohexan-1,2,4,5-tetracarbonsäuretetra-2-ethylhexyl-ester, Cyclohexan-1,2,4,5-tetracarbonsäuretetra-n-nonylester, Cyclohexan-1,2,4,5-tetra-carbonsäuretetraisononylester, Cyclohexan-1,2,4,5-tetracarbonsäuretetra-n-decylester, Cyclohexan-1,2,4,5-tetracarbonsäuretetra-isodecylester, Cyclohexan-1,2,4,5-tetracarbonsäuretetraisododecylester, Cyclohexan-1,2,4,5-tetracarbonsäuretetra-n-undecylester, Cyclohexan-1,2,4,5-tetracarbonsäuretetra-n-octadecylester, Cyclohexan-1,2,4,5-tetracarbonsäure-tetraisooctadecylester, Cyclohexan-1,2,4,5-tetracarbonsäuretetra-n-eicosylester, Cyclohexan-1,2,4,5-tetracarbonsäuretetracyclohexylester, Cyclohexan-1,2,4,5-tetracarbonsäure-di-n-hexylester, Cyclohexan-1,2,4,5-tetracarbonsäurediisohexylester, Cyclohexan-1,2,4,5-tetracarbonsäuretri-n-hexylester, Cyclohexan-1,2,4,5-tetracarbonsäuretriisohexylester, Cyclohexan-1,2,4,5-tetracarbonsäuredi-n-heptylester, Cyclohexan-1,2,4,5-tetracarbonsäurediisoheptylester, Cyclohexan-1,2,4,5-tetracarbonsäuretri-n-heptylester, Cyclohexan-1,2,4,5-tetracarbonsäuretriisoheptylester, Cyclohexan-1,2,4,5-tetracarbonsäuredi-n-pentyl-ester, Cyclohexan-1,2,4,5-tetracarbonsäurediisopentylester, Cyclohexan-1,2,4,5-tetra-carbonsäuretri-n-pentylester, Cyclohexan-1,2,4,5-tetracarbonsäuretriisopentylester, Cyclohexan-1,2,4,5-tetracarbonsäuredi-n-tridecylester, Cyclohexan-1,2,4,5-tetracarbonsäure-diisotridecylester, Cyclohexan-1,2,4,5-tetracarbonsäuretri-n-tridecylester, Cyclohexan-1,2,4,5-tetracarbonsäuretriisotridecylester, Cyclohexan-1,2,4,5-tetracarbonsäuredi-n-dode-cylester, Cyclohexan-1,2,4,5-tetracarbonsäurediisoundecylester, Cyclohexan-1,2,4,5-tetracarbonsäuretri-n-dodecylester, Cyclohexan-1,2,4,5-tetracarbonsäuretriiso-undecylester, Cyclohexan-1,2,4,5-tetracarbonsäuretriisopropylester, Cyclohexan-1,2,4,5-tetracarbonsäuretetra-n-hexylester, Cyclohexan-1,2,4,5-tetracarbonsäuretetraisohexylester, Cyclohexan-1,2,4,5-tetracarbonsäuretetra-n-heptylester, Cyclohexan-1,2,4,5-tetracarbonsäure-tetraisoheptylester, Cyclohexan-1,2,4,5-tetracarbonsäuretetra-n-pentylester, Cyclohexan-1,2,4,5-tetracarbonsäuretetraisopentylester, Cyclohexan-1,2,4,5-tetracarbonsäuretetra-n-tridecylester, Cyclohexan-1,2,4,5-tetracarbonsäuretetraisotridecylester, Cyclohexan-1,2,4,5-tetracarbonsäure-tetra-n-dodecylester, Cyclohexan-1,2,4,5-tetracarbonsäuretetraisoundecylester, Cyclohexan-1,2,4,5-tetra-carbonsäuretetraisopropylester. Anhydride der Cyclohexan-1,2-dicarbonsäure, Cyclohexan-1,2,4-tricarbonsäure, Cyclohexan-1,2,3-tricarbonsäure und Cyclohexan-1,2,4,5-tetracarbonsäure.

Im Sinne der vorliegenden Erfindung geeignet sind darüber hinaus auch die in der WO 99/32427 offenbarten, im folgenden nochmals aufgelisteten Cyclohexan-1,2-dicarbonsäureester: Cyclohexan-1,2-dicarbonsäuredi(isopentyl)ester, erhältlich durch Hydrierung von Di(isopentyl)phthalat mit der Chemical Abstracts Registry Nummer (im folgenden: CAS Nr.) 84777-06-0;
Cyclohexan-1,2-dicarbonsäuredi(isoheptyl)ester, erhältlich durch Hydrierung von Di(isoheptyl)phthalat mit der CAS Nr. 71888-89-6;
Cyclohexan-1,2-dicarbonsäuredi(isononyl)ester, erhältlich durch Hydrierung eines Di(isononyl)phthalats mit der CAS Nr. 68515-48-0;
Cyclohexan-1,2-dicarbonsäuredi(isononyl)ester, erhältlich durch Hydrierung eines Di(isononyl)phthalats mit der CAS Nr. 28553-12-0, basierend auf n-Buten;
Cyclohexan-1,2-dicarbonsäuredi(isononyl)ester, erhältlich durch Hydrierung eines Di(isononyl)phthalats mit der CAS Nr. 28553-12-0 basierend auf Isobuten;
ein 1,2-Di-C₉-Ester der Cyclohexandicarbonsäure, erhältlich durch Hydrierung eines Di(nonyl)phthalats mit der CAS Nr. 68515-46-8;
ein Cyclohexan-1,2-dicarbonsäuredi(isodecyl)ester erhältlich durch Hydrierung eines Di(isodecyl)phthalats mit der CAS Nr. 68515-49-1;
ein 1,2-Di-C₇₋₁₁-Ester der Cyclohexandicarbonsäure, erhältlich durch Hydrierung des entsprechenden Phthalsäureesters mit der CAS Nr. 68515-42-4;
ein 1,2-Di-C₇₋₁₁-Ester der Cyclohexandicarbonsäure, erhältlich durch Hydrierung der Di-C₇₋₁₁₋Phthalate mit folgenden CAS Nr.
111 381-89-6,
111 381 90-9,
111 381 91-0,
68515-44-6,
68515-45-7 und
3648-20-7;
ein 1,2-Di-C₉₋₁₁-Ester der Cyclohexandicarbonsäure, erhältlich durch Hydrierung eines Di-C₉₋₁₁-Phthalats mit der CAS Nr. 98515-43-5;
ein 1,2-Di(isodecyl)cyclohexandicarbonsäureester, erhältlich durch Hydrierung eines Di(isodecyl)phthalats, das hauptsächlich aus Di-(2-propylheptyl)phthalt besteht;
ein 1,2-Di-C₇₋₉-Cyclohexandicarbonsäureester, erhältlich durch Hydrierung des entsprechenden Phthalsäureesters der verzweigtkettige oder lineare C₇₋₉-Alkylestergruppen aufweist; entsprechende beispielsweise als Ausgangsprodukte verwendbare Phthalate haben die folgende CAS Nr.:
Di-C_{7,9}-Alkylphthalat mit der CAS Nr. 111 381-89-6;
Di-C₇-Alkylphthalat mit der CAS Nr. 68515-44-6; und
Di-C₉-Alkylphthalat mit der CAS Nr. 68515-45-7.

Der Inhalt der WO 99/32427, der sich u.a. auf diese soeben aufgelisteten Verbindungen und die Herstellung von Benzolpolycarbonsäuren unter Verwendung spezieller Makroporen aufweisender Katalysatoren bezieht, wird hiermit erwährt.

Erfindungsgemäß sind auch Hydrierprodukte von Phthalsäure-Mischestern mit C10- und C13-Alkoholen verwendbar wie sie in der DE-A 10032580.7 beschrieben sind.

Des weiteren sind auch die Hydrierungsprodukte der kommerziell erhältlichen Benzolcarbonsäureester mit den Handelsnamen Jayflex DINP (CAS Nr. 68515-48-0), Jayflex DIDP (CAS Nr. 68515-49-1), Palatinol 9-P, Vestinol 9 (CAS Nr. 28553-12-0), TOTM-I (CAS Nr. 3319-31-1), Linplast 68-TM, Palatinol N (CAS Nr. 28553-12-0), Jayflex DHP (CAS Nr. 68515-50-4), Jayflex DIOP (CAS Nr. 27554-26-3), Jayflex UDP (CAS Nr. 68515-47-9), Jayflex DIUP (CAS Nr. 85507-79-5), Jayflex DTDP (CAS Nr. 68515-47-9), Jayflex L9P (CAS Nr. 68515-45-7), Jayflex L911P (CAS Nr. 68515-43-5), Jayflex L11P (CAS Nr. 3648-20-2), Witamol 110 (CAS Nr. 90193-91-2), Witamol 118 (Di-n-C8-C10-alkylphthalat), Unimoll BB (CAS Nr. 85-68-7), Linplast 1012 BP (CAS Nr. 90193-92-3), Linplast 13 XP (CAS Nr. 27253-26-5), Linplast 610 P (CAS Nr. 68515-51-5), Linplast 68 FP (CAS Nr. 68648-93-1) und Linplast 812 HP (CAS Nr. 70693-30-0), Palatinol AH (CAS Nr. 117-81-7), Palatinol 711 (CAS Nr. 68515-42-4), Palatinol 911 (CAS Nr. 68515-43-5), Palatinol 11 (CAS Nr. 3648-20-2), Palatinol Z (CAS Nr. 26761-40-0) und Palatinol DIPP (CAS Nr. 84777-06-0) als geeignet im Sinne der vorliegenden Erfindung zu bewerten.

In einer bevorzugten Ausführungsform betrifft die vorliegende Erfindung daher eine einteilige Verschlussvorrichtung, wobei die mindestens eine Cyclohexanpolycarbonsäure oder das Derivat davon ausgewählt wird aus der Gruppe bestehend aus:
- gemischte Ester der Cyclohexan-1,2-dicarbonsäure mit C1 bis C13-Alkoholen;
- Monoester der Cyclohexan-1,2-dicarbonsäure mit C1 bis C13-Alkoholen;
- Cyclohexan-1,2-dicarbonsäuredi(isopentyl)ester, erhältlich durch Hydrierung von Di(isopentyl)phthalat mit der Chemical Abstracts Registry Nummer (im folgenden: CAS Nr.) 84777-06-0;
   Cyclohexan-1,2-dicarbonsäuredi(isoheptyl)ester, erhältlich durch Hydrierung von Di(isoheptyl)phthalat mit der CAS Nr. 71888-89-6;
   Cyclohexan-1,2-dicarbonsäuredi(isononyl)ester, erhältlich durch Hydrierung eines Di(isononyl)phthalats mit der CAS Nr. 68515-48-0;
   Cyclohexan-l,2-dicarbonsäuredi(isononyl)ester, erhältlich durch Hydrierung eines Di(isononyl)phthalats mit der CAS Nr. 28553-12-0, basierend auf n-Buten;
   Cyclohexan-1,2-dicarbonsäuredi(isononyl)ester, erhältlich durch Hydrierung eines Di(isononyl)phthalats mit der CAS Nr. 28553-12-0 basierend auf Isobuten;
   ein 1,2-Di-C₉-Ester der Cyclohexandicarbonsäure, erhältlich durch Hydrierung eines Di(nonyl)phthalats mit der CAS Nr. 68515-46-8;
   ein Cyclohexan-1,2-dicarbonsäuredi(isodecyl)ester erhältlich durch Hydrierung eines Di(isodecyl)phthalats mit der CAS Nr. 68515-49-1;
   ein 1,2-Di-C₇₋₁₁-Ester der Cyclohexandicarbonsäure, erhältlich durch Hydrierung des entsprechenden Phthalsäureesters mit der CAS Nr. 68515-42-4;
   ein 1,2-Di-C₇₋₁₁-Ester der Cyclohexandicarbonsäure, erhältlich durch Hydrierung der Di-C₇₋₁₁-Phthalate mit folgenden CAS Nr.
   111 381-89-6,
   111 381 90-9,
   111 381 91-0,
   68515-44-6,
   68515-45-7 und
   3648-20-7;
   ein 1,2-Di-C₉₋₁₁-Ester der Cyclohexandicarbonsäure, erhältlich durch Hydrierung eines Di-C₉₋₁₁-Phthalats mit der CAS Nr. 98515-43-S;
   ein 1,2-Di(isodecyl)cyclohexandicarbonsäureester, erhältlich durch Hydrierung eines Di(isodecyl)phthalats, das hauptsächlich aus Di-(2-propylheptyl)phthalt besteht;
   ein 1,2-Di-C₇₋₉-Cyclohexandicarbonsäureester, erhältlich durch Hydrierung des entsprechenden Phthalsäureesters der verzweigtkettige oder lineare C₇₋₉₋Alkylestergruppen aufweist; entsprechende als Ausgangsprodukte verwendbare Phthalate haben die folgende CAS Nr.:
   Di-C_{7,9}-Alkylphthalat mit der CAS Nr. 111 381-89-6;
   Di-C₇-Alkylphthalat mit der CAS Nr. 68515-44-6; und
   Di-C₉-Alkylphthalat mit der CAS Nr. 68515-45-7.
- Hydrierprodukte von Phthalsäure-Mischestern mit C10- und C13-Alkoholen;
- die Hydrierungsprodukte der kommerziell erhältlichen Benzolcarbonsäureester mit den Handelsnamen Jayflex DINP (CAS Nr. 68515-48-0), Jayflex DIDP (CAS Nr. 68515-49-1), Palatinol 9-P, Vestinol 9 (CAS Nr. 28553-12-0), TOTM-I (CAS Nr. 3319-31-1), Linplast 68-TM, Palatinol N (CAS Nr. 28553-12-0), Jayflex DHP (CAS Nr. 68515-50-4), Jayflex DIOP (CAS Nr. 27554-26-3), Jayflex UDP (CAS Nr. 68515-47-9), Jayflex DIUP (CAS Nr. 85507-79-5), Jayflex DTDP (CAS Nr. 68515-47-9), Jayflex L9P (CAS Nr. 68515-45-7), Jayflex L911P (CAS Nr. 68515-43-5), Jayflex L11P (CAS Nr. 3648-20-2), Witamol 110 (CAS Nr. 90193-91-2), Witamol 118 (Di-n-C8-C10-alkylphthalat), Unimoll BB (CAS Nr. 85-68-7), Linplast 1012 BP (CAS Nr. 90193-92-3), Linplast 13 XP (CAS Nr. 27253-26-5), Linplast 610 P (CAS Nr. 68515-51-5), Linplast 68 FP (CAS Nr. 68648-93-1) und Linplast 812 HP (CAS Nr. 70693-30-0), Palatinol AH (CAS Nr. 117-81-7), Palatinol 711 (CAS Nr. 68515-42-4), Palatinol 911 (CAS Nr. 68515-43-5), Palatinol 11 (CAS Nr. 3648-20-2), Palatinol Z (CAS Nr. 26761-40-0) und Palatinol DIPP (CAS Nr. 84777-06-0);
wobei die mindestens eine Cyclohexanpolycarbonsäure oder das Derivat davon als cis-Isomer oder als trans-Isomer oder als ein Gemisch aus cis- und trans-Isomer vorliegen kann.

Die erfindungsgemäßen Verschlussvorrichtungen haben einen Gehalt (Gew.-%) von 1 bis 80%, bevorzugt 5 bis 55%, besonders bevorzugt von 10 bis 50% und insbesondere von 15 bis 45% an Cyclohexanpolycarbonsäuren oder Derivaten davon. Die Cyclohexanpolycarbonsäuren oder Derivaten davon können in den erfindungsgemäßen Gemischen als cis-Isomer oder als trans-Isomer oder als Gemisch aus cis- und trans-Isomer vorliegen.

Sofern die erfindungsgemäße Verschlussvorrichtung ein Gemisch aus cis- und trans-Isomer einer Cyclohexanpolycarbonsäure oder eines Derivats davon, insbesondere einer Cyclohexan-1,2-dicarbonsäure oder eines Derivats davon, enthält, ist es im Rahmen der vorliegenden Erfindung bevorzugt, dass das Gemisch aus cis- und trans-Isomer ein Isomerenverhältnis cis:trans von 0:100 bis 100:0, insbesondere von 70:30 bis 99:1, besonders bevorzugt von 80:20 bis 95:5, aufweist.

Das gewünschte Isomerenverhältnis der Cyclohexanpolycarbonsäure oder des Derivats davon lässt sich beispielsweise bei der Herstellung einstellen, beispielsweise durch die Temperatur bei der Herstellung durch Hydrierung. Es ist jedoch ebenso möglich, dass das gewünschte Isomerenverhältnis durch Mischen der einzelnen Isomere eingestellt wird.

Besonders bevorzugt sind im Rahmen der vorliegenden Erfindung als Weichmacher Cyclohexan-1,2-dicarbonsäuredi(isononyl)ester, erhältlich durch Hydrierung eines Di(isononyl)phthalats mit der CAS Nr. 28553-12-0.

Daher betrifft die vorliegende Erfindung in einer bevorzugten Ausführungsform einteilige Verschlussvorrichtungen, wobei die Cyclohexandicarbonsäure Cyclohexan-1,2-dicarbonsäuredi(isononyl)ester, erhältlich durch Hydrierung eines Di(isononyl)phthalats mit der CAS-Nummer 28553-12-0 ist.

Das Isononanolgemisch, auf dem der erfindungsgemäße Cyclohexan-1,2-dicarbonsäuredi(isononyl)ester, erhältlich durch Hydrierung eines Di(isononyl)phthalats mit der CAS Nr. 28553-12-0, basierend auf n-Buten, basiert, kann beispielsweise im Rahmen der vorliegenden Erfindung 11,0 % Nonanol, 20,8% 6-Methyloktanol, 20,5% 4-Methyloktanol, 5,3% 2-Methyloktanol, 8,7% 3-Ethylheptanol, 2,9% 2-Ethylheptanol, 2,7% 2-Propylhexanol, 6,2% 4,5-Dimethylheptanol, 11,0% 2,5-Dimethylheptanol, 2,8% 2,3-Dimethylheptanol, 1,6% 3-Ethyl-4-methylhexanol, 3,0% 2-Ethyl-4-methylhexanol und 3,5% sonstige C9-Alkohole enthalten.

Abhängig vom Gehalt an Weichmachern wird zwischen Hart-PVC (<0,1% Weichmacher) und Weich-PVC (>0,1% Weichmacher) unterschieden.

Polyvinylchlorid wird durch Homopolymerisation von Vinylchlorid erhalten. Das erfindungsgemäß verwendete Polyvinylchlorid (PVC) kann beispielsweise durch Suspensionspolymerisation, Mikrosuspensionspolymerisation, Emulsionspolymerisation oder Massenpolymerisation hergestellt werden. Die Herstellung von PVC durch Polymerisation von Vinylchlorid sowie Herstellung und Zusammensetzung von weichgemachtem PVC sind beispielsweise beschrieben in "Becker/Braun, Kunststoff-Handbuch, Band 2/1: Polyvinylchlorid", 2. Auflage, Carl Hanser Verlag, München.

Der K-Wert, der die Molmasse des PVC charakterisiert und nach DIN 53726 bestimmt wird, liegt für das erfindungsgemäß verwendete PVC zwischen 57 und 90, bevorzugt zwischen 61 und 85, insbesondere zwischen 64 und 75.

Im Rahmen der Erfindung liegt der Gehalt (Gew.-%) an PVC der Verschlussvorrichtungen bei 20 bis 99%, bevorzugt 45 bis 95%, besonders bevorzugt bei 50 bis 90% und insbesondere bei 55 bis 85%.
Die erfindungsgemäßen Verschlussvorrichtungen können neben mindestens einem Weichmacher, insbesondere mindestens einer Cyclohexandicarbonsäure oder einem Derivat davon und einem Polyvinylchlorid auch noch andere geeignete Zusatzstoffe enthalten. Beispielsweise können Stabilisatoren, Gleitmittel, Füllstoffe, Pigmente, Flamminhibitoren, Lichtstabilisatoren, Treibmittel, polymere Verarbeitungshilfsmittel, Schlagzähverbesserer, optische Aufheller, Antistatika oder Biostabilisatoren enthalten sein.

Im Folgenden werden einige geeignete Zusatzstoffe näher beschrieben. Die aufgeführten Beispiele stellen jedoch keine Einschränkung der erfindungsgemäßen Verschlussvorrichtungen dar, sondern dienen lediglich der Erläuterung. Alle Angaben zum Gehalt sind Gew.-%-Angaben.

Stabilisatoren neutralisieren die während und/oder nach der Verarbeitung des PVC abgespaltene Salzsäure.

Als Stabilisatoren kommen alle üblichen PVC-Stabilisatoren in fester und flüssiger Form in Betracht, beispielsweise übliche Ca/Zn-, Ba/Zn-, Pb- oder Sn-Stabilisatoren sowie auch säurebindende Schichtsilikate wie Hydrotalcit.

Die erfindungsgemäßen Verschlussvorrichtungen können einen Gehalt an Stabilisatoren von 0,05 bis 7%, bevorzugt 0,1 bis 5%, besonders bevorzugt von 0,2 bis 4% und insbesondere von 0,5 bis 3% aufweisen.

Gleitmittel sollen zwischen den PVC-Partikeln wirksam werden und Reibungskräfte beim Mischen, Plastifizieren und Verformen entgegenwirken.

Als Gleitmittel können die zur Herstellung der erfindungsgemäßen Verschlussvorrichtungen eingesetzten Gemische alle für die Verarbeitung von Kunststoffen üblichen Gleitmittel enthalten. Beispielsweise kommen in Betracht Kohlenwasserstoffe, wie Öle, Paraffine und PE-Wachse, Fettalkohole mit 6 bis 20 C-Atomen, Ketone, Carbonsäuren, wie Fettsäuren und Motansäure, oxidiertes PE-Wachs, Metallsalze von Carbonsäuren , Carbonsäureamide sowie Carbonsäureester, beispielsweise mit den Alkoholen Ethanol, Fettalkoholen, Glycerin, Ethandiol, Pentaerythrit und langkettige Carbonsäuren als Säurekomponente.

Die zur Herstellung der erfindungsgemäßen Verschlussvorrichtungen eingesetzten Gemische können einen Gehalt an Gleitmittel von 0,01 bis 10%, bevorzugt 0,05 bis 5%, besonders bevorzugt von 0,1 bis 3% und insbesondere von 0,2 bis 2% aufweisen.

Füllstoffe beeinflussen vor allem die Druck-, Zug- und Biegefestigkeit sowie die Härte und Wärmeformbeständigkeit von weichgemachtem PVC in positiver Weise.

Im Rahmen der Erfindung können die Verschlussvorrichtungen auch Füllstoffe wie beispielsweise Ruß und andere anorganische Füllstoffe, wie natürliche Calciumcarbonate, beispielsweise Kreide, Kalkstein und Marmor, synthetische Calciumcarbonate, Dolomit, Silikate, Kieselsäure, Sand, Diatomeerde, Aluminiumsilikate, wie Kaolin, Glimmer und Feldspat enthalten. Vorzugsweise werden als Füllstoffe Calciumcarbonate, Kreide, Dolomit, Kaolin, Silikate, Talkum oder Ruß eingesetzt.

Die erfindungsgemäßen Verschlussvorrichtungen können einen Gehalt an Füllstoffen von 0,01 bis 80%, bevorzugt 0,1 bis 60%, besonders bevorzugt von 0,5 bis 50% und insbesondere von 1 bis 40% aufweisen.

Die erfindungsgemäßen Verschlussvorrichtungen können auch Pigmente enthalten, um das erhaltene Produkt an unterschiedliche Einsatzmöglichkeiten anzupassen.

Im Rahmen der vorliegenden Erfindung können sowohl anorganische Pigmente als auch organische Pigmente eingesetzt werden. Als anorganische Pigmente können beispielsweise Cadmium-Pigmente, wie CdS, Kobalt-Pigmente, wie CoO/Al₂O₃, und Chrom-Pigmente, beispielsweise Cr₂O₃, verwendet werden. Als organische Pigmente kommen beispielsweise Monoazopigmente, kondensierte Azopigmente, Azomethinpigmente, Anthrachinonpigmente, Chincridone, Phthalocyaninpigmente, Dioxazinpigmente und Anilinpigmente in Betracht.

Die erfindungsgemäßen Verschlussvorrichtungen können einen Gehalt an Pigmenten von 0,01 bis 10%, bevorzugt 0,05 bis 5%, besonders bevorzugt von 0,1 bis 3% und insbesondere von 0,5 bis 2% aufweisen.

Um die Entflammbarkeit zu vermindern und die Rauchentwicklung beim Verbrennen zu verringern, können die erfindungsgemäßen Verschlussvorrichtungen auch Flamminhibitoren enthalten.

Als Flamminhibitoren können beispielsweise Antimontrioxid, Phosphatester, Chlorparaffin, Aluminiumhydroxid, Borverbindungen, Molybdäntrioxid, Ferrocen, Calciumcarbonat oder Magnesiumcarbonat verwendet werden.

Die erfindmgsgemäßen Verschlussvorrichtungen können einen Gehalt an Flamminhibitoren von 0,01 bis 10%, bevorzugt 0,1 bis 8%, besonders bevorzugt von 0,2 bis 5% und insbesondere von 0,5 bis 3% aufweisen.

Um die erfindungsgemäßen Verschlussvorrichtungen vor einer Schädigung im Oberflächenbereich durch den Einfluß von Licht zu schützen, können die Verschlussvorrichtungen auch Lichtstabilisatoren enthalten.

Es können im Rahmen der vorliegenden Erfindung beispielsweise Hydroxybenzophenone oder Hydroxyphenylbenzotriazole eingesetzt werden.

Die erfindungsgemäßen Verschlussvorrichtungen können einen Gehalt an Lichtstabilisatoren von 0,01 bis 7%, bevorzugt 0,1 bis 5%, besonders bevorzugt von 0,2 bis 4% und insbesondere von 0,5 bis 3% aufweisen.

Im Rahmen der Erfindung können die erfindungsgemäßen Verschlussvorrichtungen auch weitere Kunststoffe ausgewählt aus der Gruppe bestehend aus Homo- und Copolymeren auf Basis von Ethylen, Propylen, Butadien, Vinylacetat, Glycidylacrylat, Glycidylmethacrylat, Acrylaten und Methacrylaten mit Alkoholkomponenten von verzweigten oder unverzweigten C1 bis C10-Alkoholen, Styrol oder Acrylnitril enthalten.

Zu nennen sind beispielsweise Polyacrylate mit gleichen oder verschiedenen Alkoholresten aus der Gruppe der C4 bis C8-Alkohole, besonders des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, Nitrilkautschuk, Acrylnitril-Butadien-Styrol-Copolymere, Ethylen-Propylen-Copolymere, Ethylen-Propylen-Dien-Copolymere, Styrol-Acrylnitril-Copolymere, Acrylnitril-Butadien-Rubber, Styrol-Butadien-Elastomere und Methylmethacrylat-Styrol-Butadien-Copolymere.

Darüber hinaus betrifft die vorliegende Erfindung auch ein Verfahren zur Herstellung einer einteiligen Verschlussvorrichtung, umfassend mindestens Polyvinylchlorid und mindestens einen Weichmacher oder umfassend mindestens Polyvinylchlorid und mindestens eine Cyclohexandicarbonsäure oder ein Derivat davon, bei dem die Komponenten miteinander in Kontakt gebracht werden.

Für die Herstellung der erfindungsgemäßen Verschlussvorrichtungen werden bevorzugt das Plastisolverfahren oder die thermoplastische Verarbeitung verwendet.

In einer bevorzugten Ausführungsform betrifft die vorliegende Erfindung daher ein Verfahren zur Herstellung einer einteiligen Verschlussvorrichtungen, bei dem die Komponenten nach einem Plastisolverfahren verarbeitet werden.

Beim Plastisolverfahren wird zunächst ein Gemisch hergestellt aus PVC-Pulver, bevorzugt Pasten PVC Typ, üblicherweise Emulsions PVC Typen, einem Weichmacher und gegebenenfalls einem Thermostabilisator, beispielsweise auf Ca-Zn Basis, einem Treibmittel, beispielsweise Azodicarbonamid, sowie weiteren Zusätzen, wie Füllstoffe, Pigmente, Farbstoffe, Lichtstabilisatoren, Antistatika, Biostabilisatoren. Dieses Gemisch wird anschließend unter Verwendung einer geeigneten Homogenisiereinheit, beispielsweise einem 3-Walzen-Stuhl oder einem Dissolvermischer, verpastet und im Anschluss daran im Hochvakuum von noch enthaltener Luft befreit (entlüftet).

Das erhaltene Plastisol wird anschließend in einer geeigneten hitzebeständigen Form, vorzugsweise aus dickwandigem Metall, vorgeheizt auf 200-220°C, vergossen. Nach weiterer Wärmezufuhr, beispielsweise in einem Umlufttrockenschrank, wird nach empirisch zu ermittelnder Gelierzeit die Form samt Gießling entnommen und schnell, beispielsweise im Wasserbad, auf Temperaturen unter 50°C abgekühlt. Am entformten Gießling können dann anwendungstechnischen Untersuchungen durchgeführt werden.

Als Alternative zum chemisch getriebenen Schaum ist auch ein mechanisch durch Gaszusatz getriebener Schaum (Schlagschaum) einsetzbar.

Bei der thermoplastischen Verarbeitung wird ein Gemisch hergestellt aus PVC-Pulver, bevorzugt PVC-Pulver, das nach dem Suspensionsverfahren hergestellt wurde, einem Weichmacher sowie ggf. weiteren Zusätzen, wie Stabilisatoren, Gleitmittel, Füllstoffe, Pigmente, Farbstoffe, Flamminhibitoren, Lichtstabilisatoren, Antistatika, Treibmittel, Kikker, Biostabilisatoren. Dieses Gemisch wird in einem schnelllaufenden Fluidmischer homogenisiert und durch die eingebrachte Friktion auf ausreichend hohe Temperaturen über den Trockenpunkt erwärmt. Zu beachten ist, dass die Temperatur nicht die Starttemperatur der Treibmittelzersetzung erreicht.

Das auf diesem Weg erhaltene Dry-Blend wird anschließend thermoplastisch weiterverarbeitet, vorzugsweise in einem Extruder. Hierbei ist eine Temperatur und Zeitführung sowie Schneckengeometrie einzustellen, welche eine optimale Zellstruktur des erhaltenen Stranges ergibt. Eine Verarbeitung mit einem Zwischenschritt als Granulat ist ebenso möglich.
Die erfindungsgemäßen einteiligen Verschlussvorrichtungen, bzw. die nach einem erfindungsgemäßen Verfahren hergestellten einteiligen Verschlussvorrichtungen eignen sich zum Verschließen von Behältern, insbesondere von Flaschen oder Weinflaschen.

Daher betrifft die vorliegende Erfindung auch Verwendung einer einteiligen Verschlussvorrichtung oder einer einteiligen Verschlussvorrichtung hergestellt nach einem erfindungsgemäßen Verfahren als Verschluss für Behälter, insbesondere als Verschluss für eine Flasche oder Weinflasche.

In folgenden soll die vorliegende Erfindung anhand von Beispielen näher erläutert werden.

### Beispiele

### Beispiel 1: Herstellung einer erfindungsgemäßen Verschlussvorrichtung nach dem Plastisol-Verfahren

100 g Emulsions-PVC vom Typ "Vestolit P 1351 K"; 60 g eines Cyclohexan-1,2-dicarbonsäuredi(isononyl)esters, erhältlich durch Hydrierung eines Di(isononyl)phthalats mit der CAS Nr. 28553-12-0, als Weichmacher, 3 g Porofor ADC-F und 3 g Na/Zn-Stabilisator/Kicker vom Typ "Bärostab KK 1071" werden mit einem Spatel bei Raumtemperatur vermischt. Die Mischung wird anschließend auf einem wassergekühlten 3-Walzen-Stuhl homogenisiert. Das so erhaltene homogene Plastisol wird in einem Exssicator entlüftet und nach dem kollabieren weitere 10 Minuten einem Vakuum von 15mm Hg ausgesetzt. Anschließend wird das Palstisol in die vorgeheizte Form vergossen, geliert, abgekühlt und entformt.

### Beispiel 2: Herstellung einer erfindungsgemäßen Verschlussvorrichtung nach dem thermoplastischen Verfahren

100 g Suspensions-PVC vom Typ "Solvin 271 PC"; 60 g eines Cyclohexan-1,2-dicarbonsäuredi(isononyl)esters, erhältlich durch Hydrierung eines Di(isononyl)phthalats mit der CAS Nr. 28553-12-0, als Weichmacher, 3 g Porofor ADC-F und 3 g Na/Zn-Stabilisator/Kicker vom Typ "Bärostab KK 1071" werden in einem Fluidmischer bis zu einer Entnahmetemperatur von ca. 120°C hochgemischt. Das so erhaltene Dry-Blend wird in einem Extruder mit einer Düse des Außendurchmesser des gewünschten Korken zu einem Strang extrudiert. Der erhaltene Strang wird nach dem abkühlen im Wasserbad durch schneiden auf die für Korken erforderliche Länge gestückelt.

## Patentansprüche

1. Einteilige Verschlussvorrichtung, umfassend mindestens Polyvinylchlorid und mindestens einen Weichmacher,
**dadurch gekennzeichnet, dass** der Weichmacher eine substituierte oder unsubstituierte Cyclohexandicarbonsäure oder ein Derivat davon ist.

2. Einteilige Verschlussvorrichtung nach Anspruch 1, **dadurch gekennzeichnet, dass** die Cyclohexandicarbonsäure oder das Derivat davon ausgewählt wird aus der Gruppe bestehend aus kernhydrierten Mono- und Dialkylestern der Phthalsäure, Isophthalsäure und Terephthalsäure, kernhydrierten Mono-, Di- und Trialkylestern der Trimellitsäure, der Trimesinsäure und der Hemimillitsäure, Mono-, Di-, Tri- und Tetraalkylestern der Pyrromellitsäure, wobei die Alkylgruppen linear oder verzweigt sein könne und jeweils 1 bis 30 Kohlenstoffatome aufweisen, kernhydrierten Anhydriden der Phthalsäure, Trimellitsäure, Trimesinsäure und Hemimellitsäure, Pyrromellitsäuredianhydrid und Gemischen aus zwei oder mehr davon.

3. Einteilige Verschlussvorrichtung nach einem der vorherigen Ansprüche, **dadurch gekennzeichnet, dass** die mindestens eine Cyclohexanpolycarbonsäure oder das Derivat davon ausgewählt wird aus der Gruppe bestehend aus:
- gemischte Ester der Cyclohexan-1,2-dicarbonsäure mit C1 bis C13-Alkoholen;
- Monoester der Cyclohexan-1,2-dicarbonsäure mit C1 bis C13-Alkoholen;
- Cyclohexan-1,2-dicarbonsäuredi(isopentyl)ester, erhältlich durch Hydrierung von Di(isopentyl)phthalat mit der Chemical Abstracts Registry Nummer (im folgenden: CAS Nr.) 84777-06-0;
Cyclohexan-1,2-dicarbonsäuredi(isoheptyl)ester, erhältlich durch Hydrierung von Di(isoheptyl)phthalat mit der CAS Nr. 71888-89-6;
Cyclohexam-1,2-dicarbonsäuredi(isononyl)ester, erhältlich durch Hydrierung eines Di(isononyl)phthalats mit der CAS Nr. 68515-48-0;
Cyclohexan-1,2-dicarbonsäuredi(isononyl)ester, erhältlich durch Hydrierung eines Di(isononyl)phthalats mit der CAS Nr. 28553-12-0, basierend auf n-Buten;
Cyclohexan-1,2-dicarbonsäuredi(isononyl)ester, erhältlich durch Hydrierung eines Di(isononyl)phthalats mit der CAS Nr. 28553-12-0 basierend auf Isobuten;
ein 1,2-Di-C₉-Ester der Cyclohexandicarbonsäure, erhältlich durch Hydrierung eines Di(nonyl)phthalats mit der CAS Nr. 68515-46-8;
ein Cyclohexan-1,2-dicarbonsäuredi(isodecyl)ester erhältlich durch Hydrierung eines Di(isodecyl)phthalats mit der CAS Nr. 68515-49-1;
ein 1,2-Di-C₇₋₁₁-Ester der Cyclohexandicarbonsäure, erhältlich durch Hydrierung des entsprechenden Phthalsäureesters mit der CAS Nr. 68515-42-4;
ein 1,2-Di-C₇₋₁₁-Ester der Cyclohexandicarbonsäure, erhältlich durch Hydrierung der Di-C₇₋₁₁-Phthalate mit folgenden CAS Nr.
111 381-89-6,
111 381 90-9,
111 381 91-0,
68S 15-44-6,
68S1S-45-7 und
3648-20-7;
ein 1,2-Di-C₉₋₁₁-Ester der Cyclohexandicarbonsäure, erhältlich durch Hydrierung eines Di-C₉₋₁₁-Phthalats mit der CAS Nr. 98515-43-5;
ein 1,2-Di(isodecyl)cyclohexandicarbonsäureester, erhältlich durch Hydrierung eines Di(isodecyl)phthalats, das hauptsächlich aus Di-(2-propylheptyl)phthalt besteht;
ein 1,2-Di-C₇₋₉-Cyclohexandicarbonsäureester, erhältlich durch Hydrierung des entsprechenden Phthalsäureesters der verzweigtkettige oder lineare C₇₋₉₋Alkylestergruppen aufweist; entsprechende als Ausgangsprodukte verwendbare Phthalate haben die folgende CAS Nr.:
Di-C_{7,9}-Alkylphthalat mit der CAS Nr. 111 381-89-6;
Di-C₇-Alkylphthalat mit der CAS Nr. 68515-44-6; und
Di-C₉-Alkylphthalat mit der CAS Nr. 68515-45-7.
- Hydrierprodukte von Phthalsäure-Mischestern mit C10- und C13-Alkoholen;
- die Hydrierungsprodukte der kommerziell erhältlichen Benzolcarbonsäureester mit den Handelsnamen Jayflex DINP (CAS Nr. 68515-48-0), Jayflex DIDP (CAS Nr. 68515-49-1), Palatinol 9-P, Vestinol 9 (CAS Nr. 28553-12-0), TOTM-I (CAS Nr. 3319-31-1), Linplast 68-TM, Palatinol N (CAS Nr. 28553-12-0), Jayflex DHP (CAS Nr. 68515-50-4), Jayflex DIOP (CAS Nr. 27554-26-3), Jayflex UDP (CAS Nr. 68515-47-9), Jayflex DIUP (CAS Nr. 85507-79-5), Jayflex DTDP (CAS Nr. 68515-47-9), Jayflex L9P (CAS Nr. 68515-45-7), Jayflex L911P (CAS Nr. 68515-43-5), Jayflex L11P (CAS Nr. 3648-20-2), Witamol 110 (CAS Nr. 90193-91.2), Witamol 118 (Di-n-C8-C10-alkylphthalat), Unimoll BB (CAS Nr. 85-68-7), Linplast 1012 BP (CAS Nr. 90193-92-3), Linplast 13 XP (CAS Nr. 27253-26-5), Linplast 610 P (CAS Nr. 68515-51-5), Linplast 68 FP (CAS Nr. 68648-93-1) und Linplast 812 HP (CAS-Nr. 70693-30-0), Palatinol AH (CAS Nr. 117-81-7), Palatinol 711 (CAS Nr. 68515-42-4), Palatinol 911 (CAS Nr. 68515-43-5), Palatinol 11 (CAS Nr. 3648-20-2), Palatinol Z (CAS Nr. 26761-40-0) und Palatinol DIPP (CAS Nr. 84777-06-0);
wobei die mindestens eine Cyclohexanpolyearbonsäure oder das Derivat davon als cis-Isomer oder als trans-Isomer oder als ein Gemisch aus cis- und trans-Isomer vorliegen kann.

4. Einteilige Verschlussvorrichtung nach einem der vorherigen Ansprüche, **dadurch gekennzeichnet, dass** die Cyclohexandicarbonsäure Cyclohexan-1,2-dicarbonsäuredi(isononyl)ester, erhältlich durch Hydrierung eines Di(isononyl)phthalats mit der CAS-Nummer 28553-12-0 ist.

5. Einteilige Verschlussvorrichtung nach einem der vorherigen Ansprüche, **dadurch gekennzeichnet, dass** die Verschlussvorrichtung ein Verschlussstopfen ist.

6. Verfahren zur Herstellung einer einteiligen Verschlussvorrichtung, umfassend mindestens Polyvinylchlorid und mindestens eine Cyclohexandicarbonsäure oder ein Derivat davon, **dadurch gekennzeichnet, dass** die Komponenten miteinander in Kontakt gebracht werden.

7. Verfahren nach Anspruch 6, **dadurch gekennzeichnet, dass** die Komponenten nach einem Plastisolverfahren verarbeitet werden.

8. Verwendung einer einteiligen Verschlussvorrichtung gemäß einem der Ansprüche 1 bis 5 oder einer einteiligen Verschlussvorrichtung hergestellt nach einem Verfahren gemäß Anspruch 6 oder 7 als Verschluss für Behälter.

9. Verwendung einer Verschlussvorrichtung gemäß Anspruch 8, **dadurch gekennzeichnet, dass** der Behälter eine Flasche oder Weinflasche ist.

## Claims

1. A one-part closure device, comprising at least polyvinyl chloride and at least one plasticizer, wherein the plasticizer is a substituted or unsubstituted cyclohexanedicarboxylic acid or a derivative thereof.

2. The one-part closure device according to claim 1, wherein the cyclohexanedicarboxylic acid or the derivative thereof is selected from the group consisting of ring-hydrogenated mono- and dialkyl esters of phthalic acid, isophthalic acid, and terephthalic acid, ring-hydrogenated mono-, di-, and trialkyl esters of trimellitic acid, of trimesic acid, and of hemimellitic acid, and mono-, di-, tri-, and tetraalkyl esters of pyromellitic acid, where the alkyl groups may be linear or branched and each may have from 1 to 30 carbon atoms, ring-hydrogenated anhydrides of phthalic acid, trimellitic acid, trimesic acid, or hemimellitic acid, and pyromellitic dianhydride, and mixtures of two or more of these.

3. The one-part closure device according to any of the preceding claims, wherein the at least one cyclohexane polycarboxylic acid or the derivative thereof is selected from the group consisting of:
- mixed esters of cyclohexane-1,2-dicarboxylic acid with C₁-C₁₃ alcohols;
- monoesters of cyclohexane-1,2-dicarboxylic acid with C₁-C₁₃ alcohols;
- diisopentyl cyclohexane-1,2-dicarboxylate obtainable by hydrogenating diisopentyl phthalate with the Chemical Abstracts Registry Number (hereinafter: CAS No.) 84777-06-0;
diisoheptyl cyclohexane-1,2-dicarboxylate obtainable by hydrogenating diisoheptyl phthalate with the CAS No. 71888-89-6;
diisononyl cyclohexane-1,2-dicarboxylate obtainable by hydrogenating a diisononyl phthalate with the CAS No. 68515-48-0;
diisononyl cyclohexane-1,2-dicarboxylate obtainable by hydrogenating a diisononyl phthalate with the CAS No. 28553-12-0, based on n-butene;
diisononyl cyclohexane-1,2-dicarboxylate obtainable by hydrogenating a diisononyl phthalate with the CAS No. 28553-12-0, based on isobutene;
a di-C9 cyclohexane-1,2-dicarboxylate obtainable by hydrogenating a dinonyl phthalate with the CAS No. 68515-46-8;
a diisodecyl cyclohexane-1,2-dicarboxylate obtainable by hydrogenating a diisodecyl phthalate with the CAS No. 68515-49-1;
a di-C7-11 cyclohexane-1,2-dicarboxylate obtainable by hydrogenating the appropriate phthalate with the CAS No. 68515
42-4;
a di-C7-11 cyclohexane-1,2-dicarboxylate obtainable by hydrogenating the di C7-11 phthalates with the following CAS Nos.
111 381-89-6,
111 381 90-9,
111 381 91-0,
68515-44-6,
68515-45-7 and
3648-20-7;
a di-C9-11 cyclohexane-1,2-dicarboxylate obtainable by hydrogenating a di C9-11 phthalate with the CAS No. 98515-43-5;
a diisodecyl cyclohexane-1,2-dicarboxylate obtainable by hydrogenating a diisodecyl phthalate composed mainly of di-2-propylheptyl phthalate;
a di-C7-9 cyclohexane-1,2-dicarboxylate obtainable by hydrogenating the appropriate phthalate which has branched-chain or linear C7-9-alkylester groups; examples of phthalates which can be used as appropriate starting materials have the following CAS Nos:
di-C7,9-alkyl phthalate with the CAS No. 111 381-89-6;
di-C7-alkyl phthalate with the CAS No. 68515-44-6; and
di-C9-alkyl phthalate with the CAS No. 68515-45-7;
- hydrogenation products of mixed phthalates with C 10 and C 13 alcohols;
- the hydrogenation products of the commercially available benzene carboxylates with the trade names Jayflex DINP (CAS No. 68515-48-0), Jayflex DIDP (CAS No. 68515-49-1), Palatinol 9-P, Vestinol 9 (CAS No. 28553-12-0), TOTM-I (CAS No. 3319-31-1), Linplast 68-TM, Palatinol N (CAS No. 28553-12-0), Jayflex DHP (CAS No. 68515-50-4), Jayflex DIOP (CAS No. 27554-26-3), Jayflex UDP (CAS No. 68515-47-9), Jayflex DIUP (CAS No. 85507-79-5), Jayflex DTDP (CAS No. 68515-47-9), Jayflex L9P (CAS No. 68515-45-7), Jayflex L911P (CAS No. 68515-43-5), Jayflex L11P (CAS No. 3648-20-2), Witamol 110 (CAS No. 90193-91-2), Witamol 118 (di-n-C8-C10-alkyl phthalate), Unimoll BB (CAS No. 85-68-7), Linplast 1012 BP (CAS No. 90193-92-3), Linplast 13 XP (CAS No. 27253-26-5), Linplast 610 P (CAS No. 68515-51-5), Linplast 68 FP (CAS No. 68648-93-1) and Linplast 812 HP (CAS No. 70693-30-0), Palatinol AH (CAS No. 117-81-7), Palatinol 711 (CAS No. 68515-42-4), Palatinol 911 (CAS No. 68515-43-5), Palatinol 11 (CAS No. 3648-20-2), Palatinol Z (CAS No. 26761-40-0) and Palatinol DIPP (CAS No. 84777-06-0).
where the at least one cyclohexane polycarboxylic acid or the derivative thereof may be present in the form of cis-isomer or trans-isomer, or in the form of a mixture of cis- and trans-isomer.

4. The one-part closure device according to any of the preceding claims, wherein the cyclohexane dicarboxylic ester is diisononyl cyclohexane-1,2-dicarboxylate obtainable by hydrogenating a diisononyl phthalate with the CAS number 28553-12-0.

5. The one-part closure device according to any of the preceding claims, which is a closure stopper.

6. A process for producing a one-part closure device, comprising at least polyvinyl chloride and at least one cyclohexanedicarboxylic acid or a derivative thereof, which comprises bringing the components into contact with one another.

7. The process according to claim 6, wherein the components are processed by a plastisol process.

8. The use of a one-part closure device according to any of claims 1 to 5, or of a one-part closure device produced by a process according to claim 6 or 7, as a closure for containers.

9. The use of a closure device according to claim 8, wherein the container is a wine bottle or other bottle.

## Revendications

1. Dispositif de fermeture d'une seule pièce, comprenant au moins du poly(chlorure de vinyle) et au moins un agent plastifiant, **caractérisé en ce que** l'agent plastifiant est un acide cyclohexanedicarboxylique substitué ou non substitué ou un dérivé de celui-ci.

2. Dispositif de fermeture d'une seule pièce selon la revendication 1, **caractérisé en ce que** l'on choisit l'acide cyclohexanedicarboxylique ou le dérivé de celui-ci dans le groupe constitué des esters mono- ou dialkyliques à noyau hydrogéné de l'acide phtalique, de l'acide isophtalique et de l'acide téréphtalique, des esters mono-, di- et trialkyliques à noyau hydrogéné de l'acide trimellitique, de l'acide trimésique et de l'acide hémi-mellitique, des esters mono-, di-, tri- et tétraalkyliques de l'acide pyrromellitique, où les groupements alkyle peuvent être linéaires ou ramifiés et présentent respectivement 1 à 30 atomes de carbone, des anhydrides à noyau hydrogéné de l'acide phtalique, de l'acide trimellitique, de l'acide trimésique et de l'acide hémi-mellitique, du dianhydride de l'acide pyrromellitique et de mélanges de deux ou plusieurs de ceux-ci.

3. Dispositif de fermeture d'une seule pièce selon l'une quelconque des revendications précédentes, **caractérisé en ce que** l'on choisit le au moins un acide cyclohexanepolycarboxylique ou le dérivé de celui-ci dans le groupe constitué :
- d'esters mixtes de l'acide cyclohexane-1,2-dicarboxylique avec des alcools en C₁-C₁₃;
- de monoesters de l'acide cyclohexane-1,2-dicarboxylique avec des alcools en C₁-C₁₃;
- d'esters diisopentyliques de l'acide cyclohexane-1,2-dicarboxylique, qui peuvent être obtenus par hydrogénation de phtalate de diisopentyle pourvu du numéro de Chemical Abstracts Registry (traduit par enregistrement de résumés chimiques et désigné ci-après par CAS n°) 84777-06-0;
- d'esters diisoheptyliques de l'acide cyclohexane-1,2-dicarboxylique, qui peuvent être obtenus par hydrogénation de phtalate de diisoheptyle de CAS n° 71888-89-6;
- d'esters diisononyliques de l'acide cyclohexane-1,2-dicarboxylique, qui peuvent être obtenus par hydrogénation d'un phtalate de diisononyle de CAS n° 68515-48-0;
- d'esters diisononyliques de l'acide cyclohexane-1,2-dicarboxylique, qui peuvent être obtenus par hydrogénation d'un phtalate de diisononyle de CAS n° 28553-12-0 à base de n-butène;
- d'esters diisononyliques de l'acide cyclohexane-1,2-dicarboxylique, qui peuvent être obtenus par hydrogénation d'un phtalate de diisonyle de CAS n° 28553-12-0 à base d'isobutène;
- d'un 1,2-diester en C₉ de l'acide cyclohexanedicarboxylique, qui peut être obtenu par hydrogénation d'un phtalate de dinonyle de CAS n° 68515-46-8;
- d'un ester diisodécylique de l'acide cyclohexane-1,2-dicarboxylique, qui peut être obtenu par hydrogénation d'un phtalate de diisodécyle de CAS n° 68515-49-1;
- d'un 1,2-diester en C₇₋₁₁ de l'acide cyclohexanedicarboxylique, qui peut être obtenu par hydrogénation de l'ester d'acide phtalique correspondant de CAS n° 68515-42-4;
- d'un 1,2-diester en C₇₋₁₁ de l'acide cyclohexanedicarboxylique, qui peut être obtenu par hydrogénation de diphtalates en C₇₋₁₁ de numéros de CAS suivants :
111 381-89-6,
111 381 90-9,
111 381 91-0,
68515-44-6,
68515-45-7 et
3648-20-7;
- d'un 1,2-diester en C₉₋₁₁ de l'acide cyclohexanedicarboxylique, qui peut être obtenu par hydrogénation d'un diphtalate en C₉₋₁₁ de CAS n° 98515-43-5;
- d'un ester 1,2-diisodécylique de l'acide cyclohexanedicarboxylique, qui peut être obtenu par hydrogénation d'un phtalate de diisodécyle, qui est constitué principalement de phtalate de di-2-propylheptyle;
- d'un 1,2-diester en C₇₋₉ de l'acide cyclohexanedicarboxylique, qui peut être obtenu par hydrogénation de l'ester de l'acide phtalique correspondant, présentant des groupements ester d'alkyle en C₇₋₉ ramifiés ou linéaires; des phtalates correspondants utilisables comme produits de départ ont les numéros CAS suivants :
un phtalate de dialkyle en C₇₋₉ de CAS n° 111 381-89-6;
un phtalate de dialkyle en C₇ de CAS n° 68515-44-6; et
un phtalate de dialkyle en C₉ de CAS n° 68515-45-7;
- de produits d'hydrogénation d'esters mixtes de l'acide phtalique avec des alcools en C₁₀ et en C₁₃;
- de produits d'hydrogénation des esters de l'acide benzènecarboxylique disponibles dans le commerce sous les noms commerciaux Jayflex DINP (CAS n° 68515-48-0), Jayflex DIDP (CAS n° 68515-49-1), Palatinol 9-P, Vestinol 9 (CAS n° 28553-12-0), TOTM-I (CAS n° 3319-31-1), Linplast 68-TM, Palatinol N (CAS n° 28553-12-0), Jayflex DHP (CAS n° 68515-50-4), Jayflex DIOP (CAS n° 27554-26-3), Jayflex UDP (CAS n° 68515-47-9), Jayflex DIUP (CAS n° 85507-79-5), Jayflex DTDP (CAS n° 68515-47-9), Jayflex L9P (CAS n° 68515-45-7), Jayflex L911P (CAS n° 68515-43-5), Jayflex L11P (CAS n° 3648-20-2), Witamol 110 (CAS n° 90193-91-2), Witamol 118 (phtalate de di-n-alkyle en C8-C10), Unimoll BB (CAS n° 85-68-7), Linplast 1012 BP (CAS n° 90193-92-3), Linplast 13 XP (CAS n° 27253-26-5), Linplast 610 P (CAS n° 68515-51-5), Linplast 68 FP (CAS n° 68648-93-1) et Linplast 812 HP (CAS n° 70693-30-0), Palatinol AH (CAS n° 117-81-7), Palatinol 711 (CAS n° 68515-42-4), Palatinol 911 (CAS n° 68515-43-5), Palatinol 11 (CAS n° 3648-20-2), Palatinol Z (CAS n° 26761-40-0) et Palatinol DLPP (CAS n° 84777-06-0); le au moins un acide cyclohexanepolycarboxylique ou le dérivé de celui-ci pouvant se trouver sous forme d'un isomère cis ou d'un isomère trans ou d'un mélange d'isomères cis et trans.

4. Dispositif de fermeture d'une seule pièce selon l'une quelconque des revendications précédentes, **caractérisé en ce que** le dérivé de l'acide cyclohexanedicarboxylique est un ester di-isononylique de l'acide cyclohexane-1,2-dicarboxylique, que l'on peut obtenir par hydrogénation d'un phtalate de diisononyle de CAS n° 28553-12-0.

5. Dispositif de fermeture d'une seule pièce selon l'une quelconque des revendications précédentes, **caractérisé en ce que** le dispositif de fermeture est un bouchon de fermeture.

6. Procédé pour fabriquer un dispositif de fermeture d'une seule pièce, comprenant au moins du poly(chlorure de vinyle) et au moins un acide cyclohexanedicarboxylique ou un dérivé de celui-ci, **caractérisé en ce que** les composants sont mis en contact l'un avec l'autre.

7. Procédé selon la revendication 6, **caractérisé en ce que** l'on traite les composants selon un procédé au Plastisol.

8. Utilisation d'un dispositif de fermeture d'une seule pièce selon l'une quelconque des revendications 1 à 5 ou d'un dispositif de fermeture d'une seule pièce fabriqué selon un procédé répondant aux revendications 6 ou 7 comme fermeture pour récipient.

9. Utilisation d'un dispositif de fermeture selon la revendication 8, **caractérisée en ce que** le récipient est une bouteille ou une bouteille de vin.
